(19) Europäisches Patentamt
European Patent Office
Office européen des brevets

(11) **EP 4 716 353 A1**

(12) **EUROPEAN PATENT APPLICATION**
published in accordance with Art. 153(4) EPC

(43) Date of publication:
**25.03.2026 Bulletin 2026/13**

(21) Application number: **24806454.5**

(22) Date of filing: **10.05.2024**

(51) International Patent Classification (IPC):
**H04W 74/08** (2024.01)

(52) Cooperative Patent Classification (CPC):
**H04W 72/0446; H04W 72/0453; H04W 74/08; H04W 74/0833**

(86) International application number:
**PCT/CN2024/092139**

(87) International publication number:
**WO 2024/235102 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.05.2023 CN 202310546464**
**10.08.2023 CN 202311010116**

(71) Applicant: **Vivo Mobile Communication Co., Ltd. Dongguan, Guangdong 523863 (CN)**

(72) Inventors:
• **WANG, Chengrui**
**Dongguan, Guangdong 523863 (CN)**
• **LIN, Zhipeng**
**Dongguan, Guangdong 523863 (CN)**

(74) Representative: **Walaski, Jan Filip et al**
**Venner Shipley LLP**
**200 Aldersgate**
**London EC1A 4HD (GB)**

(54) **RO DETERMINATION METHOD AND APPARATUS, AND TERMINAL AND STORAGE MEDIUM**

(57) The present application belongs to the technical field of communications. Disclosed are an RO determination method and apparatus, and a terminal and a storage medium. The RO determination method in the embodiments of the present application comprises: on the basis of an RO or RO set respectively associated with at least one SSB or on the basis of a PRACH resource configuration, a terminal determining an RO or RO set for PRACH transmission.

A terminal determines, based on ROs or RO sets respectively associated with at least one SSB or based on a PRACH resource configuration, ROs or RO sets used for PRACH transmission ⎯ 500

FIG. 5

**Description**

## CROSS-REFERENCE TO RELATED APPLICATIONS

This application claims priority to Chinese Patent Application No. 202310546464.1, filed in China on May 15, 2023, and Chinese Patent Application No. 202311010116.9, filed in China on August 10, 2023, both of which are incorporated herein by reference in their entireties.

## TECHNICAL FIELD

This application pertains to the field of communication technologies, and specifically relates to an RO determining method and apparatus, a terminal, and a storage medium.

## BACKGROUND

A network may configure, by using RRC parameters, a quantity of frequency-division-multiplexed physical random access channel occasions (PRACH Occasion, RO) for sending a physical random access channel (PRACH), a quantity of synchronization signal/physical broadcast channel blocks (SS/PBCH block, SSB), and an association relationship between an SSB and an RO. Different parameter values lead to different SSB-RO mapping results.

When the PRACH is to be transmitted with repetitions, a manner of determining RO sets varies depending on different SSB-RO association results. Consequently, ROs used for PRACH transmission with repetitions are unclear, resulting in poor performance of PRACH transmission with repetitions.

## SUMMARY

Embodiments of this application provide an RO determining method and apparatus, a terminal, and a storage medium to resolve a problem of poor performance of PRACH transmission with repetitions.

According to a first aspect, an RO determining method is provided. The method is performed by a terminal and includes:

determining, by the terminal based on ROs or RO sets respectively associated with at least one synchronization signal block SSB or based on a physical random access channel PRACH resource configuration, ROs or RO sets used for PRACH transmission.

According to a second aspect, an RO determining apparatus is provided and includes:

a first determining module, configured to determine, based on ROs or RO sets respectively associated with at least one SSB or based on a PRACH resource configuration, ROs or RO sets used for PRACH transmission.

According to a third aspect, a terminal is provided. The terminal includes a processor and a memory. The memory stores a program or instructions capable of running on the processor. When the program or instructions are executed by the processor, the steps of the method according to the first aspect are implemented.

According to a fourth aspect, a terminal is provided and includes a processor and a communication interface. The processor is configured to determine, based on ROs or RO sets respectively associated with at least one SSB or based on a PRACH resource configuration, ROs or RO sets used for PRACH transmission.

According to a fifth aspect, a readable storage medium is provided. The readable storage medium stores a program or instructions. When the program or instructions are executed by a processor, the steps of the method according to the first aspect are implemented.

According to a sixth aspect, a wireless communication system is provided and includes a terminal and a network-side device. The terminal may be configured to perform the steps of the method according to the first aspect.

According to a seventh aspect, a chip is provided. The chip includes a processor and a communication interface. The communication interface is coupled to the processor. The processor is configured to run a program or instructions to implement the steps of the method according to the first aspect.

According to an eighth aspect, a computer program or program product is provided. The computer program or program product is stored in a storage medium. The computer program or program product is executed by at least one processor to implement the steps of the method according to the first aspect.

In the embodiments of this application, the ROs and/or RO sets used for PRACH transmission are determined based on the ROs and/or RO sets respectively associated with the at least one SSB or based on the PRACH resource configuration. In this way, ROs used for PRACH transmission with repetitions are clear, and performance of PRACH transmission with repetitions is improved.

**BRIEF DESCRIPTION OF DRAWINGS**

FIG. 1 is a block diagram of a wireless communication system to which an embodiment of this application may be applied;
FIG. 2 is a first schematic diagram of an SSB-RO association in the related art;
FIG. 3 is a second schematic diagram of an SSB-RO association in the related art;
FIG. 4 is a third schematic diagram of an SSB-RO association in the related art;
FIG. 5 is a first schematic flowchart of an RO determining method according to an embodiment of this application;
FIG. 6 is a first schematic diagram of an SSB-RO association according to an embodiment of this application;
FIG. 7 is a second schematic diagram of an SSB-RO association according to an embodiment of this application;
FIG. 8 is a third schematic diagram of an SSB-RO association according to an embodiment of this application;
FIG. 9 is a fourth schematic diagram of an SSB-RO association according to an embodiment of this application;
FIG. 10 is a fifth schematic diagram of an SSB-RO association according to an embodiment of this application;
FIG. 11 is a sixth schematic diagram of an SSB-RO association according to an embodiment of this application;
FIG. 12 is a schematic diagram of a structure of a communication device according to an embodiment of this application;
FIG. 13 is a schematic diagram of a hardware structure of a terminal for implementing an embodiment of this application; and
FIG. 14 is a schematic diagram of a structure of an RO determining apparatus according to an embodiment of this application.

**DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "or" in this application indicates at least one of connected objects. For example, "A or B" covers three schemes, that is, scheme 1: including A and excluding B; scheme 2: including B and excluding A; and scheme 3: including both A and B. The character "/" generally indicates an "or" relationship between associated objects.

The term "indication" in this application may be either a direct indication (or an explicit indication) or an indirect indication (or an implicit indication). The direct indication may be understood as follows: A sender explicitly notifies a receiver, in a sent indication, of content such as specific information, an operation to be performed, or a result being requested. The indirect indication may be understood as follows: A receiver determines corresponding information based on an indication sent by a sender, or makes a decision and determines, based on a decision result, an operation to be performed or a result being requested, or the like.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or other systems. The terms "system" and "network" in the embodiments of this application are usually used interchangeably. The described technologies may be used for the foregoing systems and radio technologies, and may also be used for other systems and radio technologies. However, in the following descriptions, a new radio (New Radio, NR) system is described for an illustrative purpose, and NR terms are used in most of the following descriptions. These technologies may also be applied to other systems than the NR system, for example, a 6th Generation (6th Generation, 6G) communication system.

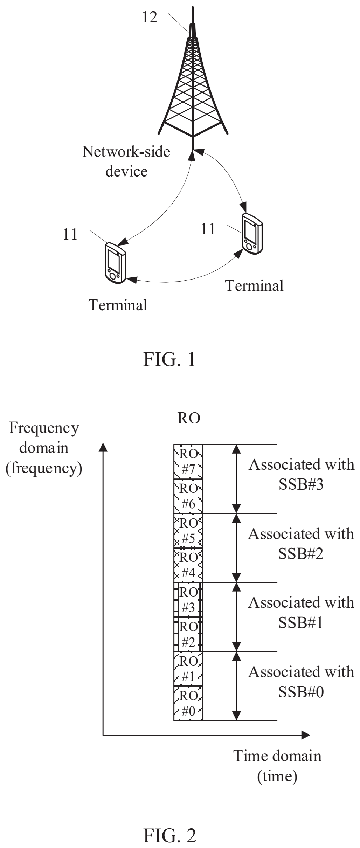

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a home device having a wireless communication function, such as a refrigerator, a television, a washing machine, or furniture), a game console, a personal computer (Personal Computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in the embodiments of this application. The network-side device 12 may include an access network device or a core network device. The access network device may also be referred to as a radio access network (Radio Access Network, RAN) device, a radio access network function, or a radio access network element. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. As long as the same technical effect is achieved, the base station is not limited to specific technical terms. It should be noted that in the embodiments of this application, only a base station in an NR system is used as an example, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), or the like. It should be noted that in the embodiments of this application, only a core network device in the NR system is used as an example for description, but a specific type of the core network device is not limited.

First, the following content is described.

(1) Random access procedure

In the related art, a random access procedure includes a contention-based random access procedure and a contention-free random access procedure.

In a contention-based four-step random access procedure, a terminal (such as user equipment UE) first sends, to a network-side device, a Msg1 including a preamble (Preamble); after detecting the preamble, the network-side device sends a random access response (Msg2/RAR) message, including numbers of preambles detected by the network-side device and uplink radio resources allocated to the UE for sending a Msg3; after receiving the Msg2, the UE determines that at least one of the numbers of the preambles carried in the Msg2 is consistent with a number of the preamble sent by the UE, and then sends, based on the resources indicated by the RAR, the Msg3 including contention resolution information; after receiving the Msg3, the network-side device sends a Msg4 including contention resolution information; and after receiving the Msg4, the UE determines that the contention resolution information is consistent with that sent by the UE in the Msg3, that is, four-step random access is completed.

The network-side device includes uplink grant (UL grant) information into the RAR to indicate scheduling information of a Msg3 PUSCH, and includes information such as a RAPID (RACH preamble ID), a TC-RNTI, and a TA. If the network-side device does not receive the Msg3 PUSCH, the network-side device may schedule retransmission of the Msg3 PUSCH in a PDCCH scrambled by the TC-RNTI.

For the contention-based random access procedure, different UEs randomly select preambles for transmission. In this way, the different UEs may select same preambles for transmission on a same time-frequency radio resource (RO resource), resulting in a preamble collision between the UEs. In this case, the different UEs receive the same RAR, and the different UEs transmit the Msg3 PUSCH based on the scheduling information in a UL grant of the RAR. Because the related art does not support Msg3 PUSCH transmission with repetitions, the network-side device can decode a PUSCH (including contention resolution information) sent by only one UE on one Msg3 PUSCH scheduling resource. Therefore, the network-side device includes the contention resolution information received in the Msg3 into the Msg4. If the contention resolution information in the Msg4 received by the UE matches the contention resolution information sent by the UE in the Msg3 PUSCH, the UE considers that contention resolution is successful. If the contention resolution information in the Msg4 received by the UE does not match the contention resolution information sent by the UE in the Msg3 PUSCH, it is considered that the contention resolution is unsuccessful.

If the contention resolution is unsuccessful, the UE reselects a resource for sending a PRACH, and performs a next random access attempt.

(2) Selection of a random access resource

In a communication system, a cell may configure a plurality of frequency-division-multiplexed (Frequency Division Multiplexed, FDM) physical random access channel transmission occasions (PRACH transmission occasion) at a time domain position for transmitting a PRACH, where the physical random access channel transmission occasions are also referred to as physical random access channel occasions (PRACH Occasion, RO). A quantity of ROs FDMed at a time may be {1, 2, 4, 8}, which is determined by a configuration of a higher-layer parameter msg1-FDM. FIG. 2 is a first schematic diagram of an SSB-RO association in the related art. As shown in FIG. 2, at a time, there are eight RO resources distributed on different frequencies.

A random access preamble (Preamble) can be transmitted only on a time domain resource (that is, an RO resource) configured by a parameter PRACHConfigurationIndex, and the random access preamble can be transmitted only on a frequency domain resource configured by a parameter msg1-FDM, where the PRACH frequency domain resource $n_{RA} \in \{0, 1, ..., M\text{-}1\}$, and M is equal to a higher-layer parameter msg1-FDM. During initial access, PRACH frequency domain resources $n_{RA}$ are numbered in ascending order from an RO resource with a lowest frequency in an initial active uplink bandwidth part (initial active uplink bandwidth part); otherwise, PRACH frequency domain resources $n_{RA}$ are numbered in ascending order from an RO resource with a lowest frequency in an active uplink bandwidth part (active uplink bandwidth part). As shown in FIG. 2, RO resources are sequentially numbered RO#0 to RO#7 in ascending order of frequencies.

In the communication system, there is an association relationship between an RO and an actually sent synchronization signal/physical broadcast channel block (SS/PBCH block, SSB) (also referred to as a synchronization signal block SS block). One SSB may be associated with a plurality of ROs, or a plurality of SSBs may be associated with one RO (in this case, different SSBs correspond to different preambles), which is configured by the network-side device by using a parameter ssb-perRACH-OccasionAndCB-PreamblesPerSSB. For example, oneEighth represents one SSB associated with eight ROs, and eight represents eight SSBs associated with one RO.

A base station may use different beams to send different SSBs, where a quantity of SSBs is configured by using a parameter ssb-PositionsInBurst, and a maximum quantity of SSBs for FR2 is 64. Corresponding UE sends a preamble on an RO associated with an SSB, so that the UE selects an RO or a "combination of an RO and a preamble" associated with an SSB with high signal quality based on strength of a received downlink beam/SSB, and sends a Msg1. In this way, the network-side device can determine, based on the RO or the "combination of the RO and the preamble" of the received preamble, the SSB selected by the UE, and send a Msg2 on a downlink beam corresponding to the SSB, to ensure quality of a received downlink signal.

Using FIG. 2 as an example, a quantity of ROs FDMed at a time is 8, and a quantity of actually transmitted SSBs is 4, that is, SSB#0, SSB#1, SSB#2, and SSB#3, where each SSB is associated with two ROs. If the UE determines to send the PRACH/Msg1/preamble on an RO corresponding to SSB#0, the UE selects one RO from RO#0 and RO#1 to send the PRACH.

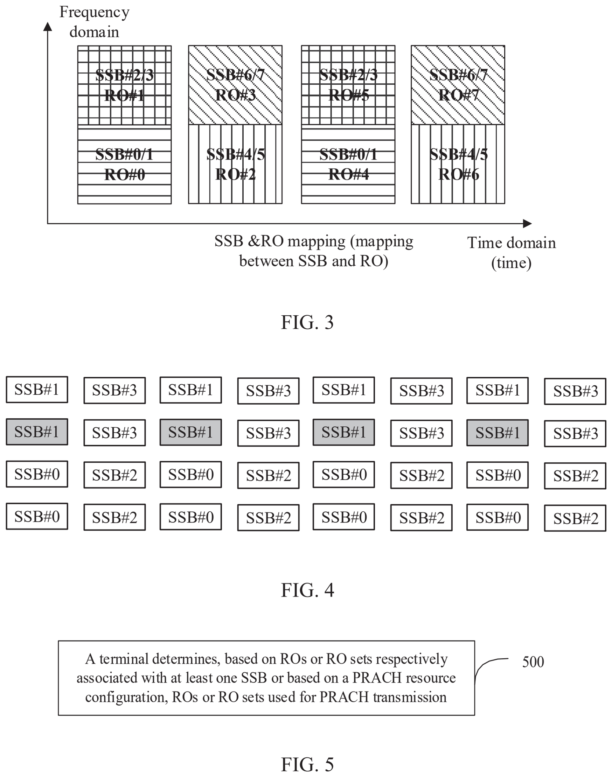

FIG. 3 is a second schematic diagram of an SSB-RO association in the related art. Using FIG. 3 as an example, a quantity of ROs FDMed at a time is 2, and a quantity of SSBs actually transmitted is 8, that is, SSB#0, SSB#1, ..., SSB#7, where every two SSBs are associated with one RO. When a plurality of SSBs share one RO, preamble sets associated with the plurality of SSBs are different, that is, a same preamble cannot belong to preamble sets associated with different SSBs. Using RO#0 in FIG. 2 as an example, there are 60 preambles associated with SSBs, where preambles with indexes of 0-29 are associated with SSB#0, and preambles with indexes of 30-59 are associated with SSB#1.

It should be noted that each rectangle in FIG. 2 and FIG. 3 corresponds to an RO, and an SSB marked in the rectangle is used to indicate which SSB or SSBs are associated with the RO corresponding to this rectangle.

Before the UE sends the PRACH, the UE first selects a resource, and selects, based on RSRP of a received beam (beam) (SSB), an SSB whose RSRP is higher than a threshold; and if there are a plurality of SSBs whose RSRP is higher than the threshold, the terminal may select any SSB whose RSRP is higher than the threshold; or when there is no SSB whose RSRP is higher than the threshold, the UE selects an SSB based on an implementation.

Based on a configuration of the network (network, NW)-side device, the UE obtains a correspondence between an SSB and an RO; and after the SSB is selected, the RO corresponding to the selected SSB is used as an RO for sending the PRACH/preamble. If the selected SSB is associated with a plurality of ROs, the terminal may select one of the ROs for sending the PRACH/preamble.

For example, in the example shown in FIG. 2, assuming that the UE selects SSB#1, the UE may select one of RO#2 and RO#3 for sending the PRACH/preamble; or in the example shown in FIG. 3, if the UE selects SSB#1, the UE may select an available RO that is closest to a current time from ROs (RO#0 or 4) associated with SSB#1, for sending the PRACH/preamble.

In the selected RO, the UE selects a preamble in a preamble set associated with the selected SSB to send the PRACH. In FIG. 3, one RO is associated with two SSBs. In this case, in an available preamble set associated with the SSBs in the RO, preambles are grouped into two subsets, and each subset corresponds to one SSB. The UE selects a preamble sequence in a preamble subset corresponding to the selected SSB for sending the PRACH.

FIG. 4 is a third schematic diagram of an SSB-RO association in the related art. Using FIG. 4 as an example, for PRACH repetitions, the UE needs to repeatedly send a preamble on a plurality of ROs associated with a same SSB at different time domain positions. The number of PRACH repetitions may be {2, 4, 8}. After the UE determines the number of PRACH repetitions, the UE needs to select an RO set, and a quantity of valid ROs in the RO set is equal to the number of PRACH repetitions. For example, assuming that a quantity of ROs FDMed at a time is 4, and that a quantity of SSBs actually transmitted is 4, that is, SSB#0, SSB#1, ..., SSB#3, and that each SSB is associated with two ROs, an SSB-RO association pattern is shown in FIG. 4. Assuming that the UE selects SSB#1 and determines that the number of PRACH repetitions is 4, the UE needs to select four ROs at different time domain positions from the ROs corresponding to SSB#1 to form an RO set for PRACH transmission with repetitions. For example, the UE may select four ROs corresponding to a shaded part in FIG. 4 to form an RO set.

The network-side device may configure RO frequency domain resources (a quantity of frequency-division-multiplexed ROs) by using the parameter msg1-FDM, configure a quantity of SSBs by using the parameter ssb-PositionsInBurst, and configure an SSB-RO association relationship by using the parameter ssb-perRACH-OccasionAndCB-PreamblesPerSSB. Different values of msg1-FDM, ssb-PositionsInBurst, and ssb-perRACH-OccasionAndCB-PreamblesPerSSB lead to different SSB-RO association results, and quantities of ROs corresponding to a same SSB at different time domain positions may be different. When the PRACH is repeatedly transmitted, different SSB-RO association results affect determination of an RO set, and a corresponding rule for determining the RO set needs to be clarified.

An RO determining method and apparatus, a terminal, and a storage medium provided in embodiments of this application are hereinafter described in detail by using some embodiments and application scenarios thereof with reference to the accompanying drawings.

FIG. 5 is a first schematic flowchart of an RO determining method according to an embodiment of this application. As shown in FIG. 5, the RO determining method includes the following step.

Step 500: A terminal determines, based on ROs or RO sets respectively associated with at least one synchronization signal block SSB or based on a physical random access channel PRACH resource configuration, ROs or RO sets used for PRACH transmission.

Optionally, the terminal determines, based on the ROs and/or RO sets respectively associated with the at least one SSB or based on the PRACH resource configuration, the ROs and/or RO sets used for PRACH transmission.

Optionally, the UE may determine a mapping between an SSB and an RO based on the ROs respectively associated with the at least one SSB.

Optionally, the UE may determine a mapping between an SSB and an RO set based on the RO sets respectively associated with the at least one SSB.

Optionally, the UE may determine a mapping between an SSB and an RO set based on the ROs respectively associated with the at least one SSB.

Optionally, the UE determines a mapping between an SSB and an RO and/or RO set, so that an RO and/or RO set used for PRACH transmission can be determined. For example, if the UE selects SSB#1, the UE may select an RO and/or RO set associated with SSB#1 to send a PRACH/preamble, for example, perform PRACH/preamble transmission with repetitions, or perform PRACH/preamble transmission with repetitions in frequency-hopping mode in a case that frequency hopping is enabled.

In this embodiment of this application, the ROs and/or RO sets used for PRACH transmission are determined based on the ROs and/or RO sets respectively associated with the at least one SSB or based on the PRACH resource configuration. In this way, ROs used for PRACH transmission with repetitions are clear, and performance of PRACH transmission with repetitions is improved.

Optionally, the determining ROs or RO sets used for PRACH transmission includes any one of the following:

the terminal determines that the ROs or RO sets used for PRACH transmission include ROs or RO sets located at different times and at a same frequency domain position among ROs or RO sets corresponding to a first SSB;

the terminal determines that the ROs or RO sets used for PRACH transmission include ROs or RO sets located at different times and at different frequency domain positions among ROs or RO sets corresponding to a first SSB;

the terminal determines that the ROs or RO sets used for PRACH transmission include ROs or RO sets located at different times and indicated by a same index among ROs or RO sets corresponding to a first SSB;

the terminal determines that the ROs or RO sets used for PRACH transmission include ROs or RO sets located at different times and indicated by different indexes among ROs or RO sets corresponding to a first SSB;

the terminal determines, based on first indication information from a network side, the ROs or RO sets used for PRACH transmission from the ROs or RO sets respectively associated with the at least one SSB, where the first indication information is used to indicate positions of the ROs or RO sets used for PRACH transmission; and

the terminal determines, based on second indication information from a network side, the ROs or RO sets used for PRACH transmission from the ROs or RO sets respectively associated with the at least one SSB, where the second indication information is used to indicate a rule for determining the ROs or RO sets used for PRACH transmission, where

the first SSB is any one of the at least one SSB, and a time unit includes one or more times.

Optionally, the determining ROs and/or RO sets used for PRACH transmission includes any one of the following:

the terminal determines that the ROs and/or RO sets used for PRACH transmission include ROs and/or RO sets located at different times and at a same frequency domain position among ROs and/or RO sets corresponding to a first SSB;

the terminal determines that the ROs and/or RO sets used for PRACH transmission include ROs and/or RO sets located at different times and at different frequency domain positions among ROs and/or RO sets corresponding to a first SSB;

the terminal determines that the ROs and/or RO sets used for PRACH transmission include ROs and/or RO sets located at different times and indicated by a same index among ROs and/or RO sets corresponding to a first SSB;

the terminal determines that the ROs and/or RO sets used for PRACH transmission include ROs and/or RO sets located at different times and indicated by different indexes among ROs and/or RO sets corresponding to a first SSB;

the terminal determines, based on first indication information from a network side, the ROs and/or RO sets used for PRACH transmission from the ROs and/or RO sets respectively associated with the at least one SSB, where the first indication information is used to indicate positions of the ROs and/or RO sets used for PRACH transmission; and

the terminal determines, based on second indication information from a network side, the ROs and/or RO sets used for PRACH transmission from the ROs and/or RO sets respectively associated with the at least one SSB, where the second indication information is used to indicate a rule for determining the ROs and/or RO sets used for PRACH transmission, where

the first SSB is any one of the at least one SSB, and a time unit includes one or more times.

In the embodiments of this application, an SSB may be associated with an RO, and a time unit may be a time or any other time length. This is not limited in the embodiments of this application.

Optionally, in a case that an SSB may be associated with an RO, and that a time unit may be a time or any other time length, a plurality of ROs (which may also be referred to as an RO set used for PRACH transmission) corresponding to the number X of PRACH repetitions are determined among ROs corresponding to a same SSB, and the rule for determining the RO sets used for PRACH transmission may be one or more of the following:

(1) At different times, X ROs corresponding to a same SSB and located at a same frequency domain position are determined as an RO set used for PRACH transmission.

(2) At different times, X ROs corresponding to a same SSB and located at different frequency domain positions are determined as an RO set used for PRACH transmission.

(3) At different times, X ROs corresponding to a same SSB and having a same index (index) are determined as an RO set used for PRACH transmission.

(4) At different times, X ROs corresponding to a same SSB and having different indexes (index) are determined as an RO set used for PRACH transmission.

The indexes may be frequency domain resource indexes that are sequentially numbered from a low frequency to a high frequency or from a high frequency to a low frequency in frequency domain only for different frequency-division-multiplexed ROs mapped to the same SSB at a same time; or the indexes may be frequency domain resource indexes that are sequentially numbered from a low frequency to a high frequency or from a high frequency to a low frequency in frequency domain for all ROs at a same time. For example, for a same time, for each SSB, ROs associated with the SSB may be indexed from a low frequency to a high frequency and numbered RO#0 and RO#1 (for example, the SSB is associated with two ROs at a time), or all ROs at a time may be numbered RO#0, RO#1, RO#2, and RO#3 from a low frequency to a high frequency.

(5) An RO set used for PRACH transmission is determined based on the first indication information from the network side.

(6) An RO set used for PRACH transmission is determined based on a rule configured by the second indication information from the network side or a predefined rule. For example, the second indication information may indicate that a plurality of ROs or RO sets used for PRACH transmission are determined based on the foregoing rule (1) or (2) or (3) or (4) or (5). For example, it may be predefined that a plurality of ROs or RO sets used for PRACH transmission are determined based on the foregoing rule (1) or (2) or (3) or (4) or (5).

In the embodiments of this application, an SSB may be associated with an RO set, and the RO set associated with the SSB may be determined in advance. A time unit may include a plurality of times, and any RO set associated with the SSB includes a plurality of ROs at the plurality of times.

Optionally, in a case that an SSB may be associated with an RO set, and that the RO set associated with the SSB may be determined in advance, and that a time unit may include a plurality of times, and that any RO set associated with the SSB includes a plurality of ROs at the plurality of times, a plurality of RO sets corresponding to the number X of PRACH repetitions are determined among RO sets corresponding to a same SSB, and the rule for determining the RO sets used for PRACH transmission may be one or more of the following:

(1) At different times in a same time unit, X ROs corresponding to a same SSB and located at a same frequency domain position are determined as an RO set used for PRACH transmission.

(2) At different times in a same time unit, X ROs corresponding to a same SSB and located at different frequency domain positions are determined as an RO set used for PRACH transmission.

(3) At different times in a same time unit, X ROs corresponding to a same SSB and having a same index (index) are determined as an RO set used for PRACH transmission.

(4) At different times in a same time unit, X ROs corresponding to a same SSB and having different indexes (index) are determined as an RO set used for PRACH transmission.

The indexes may be frequency domain resource indexes that are sequentially numbered from a low frequency to a high frequency or from a high frequency to a low frequency in frequency domain only for different frequency-division-multiplexed ROs mapped to the same SSB in a same time unit; or the indexes may be frequency domain resource indexes that are sequentially numbered from a low frequency to a high frequency or from a high frequency to a low frequency in frequency domain for all ROs in a same time unit. For example, for a same time unit, for each SSB, ROs associated with the SSB may be indexed from a low frequency to a high frequency and numbered RO#0 and RO#1 (for example, the SSB is associated with two ROs in a time unit), or all ROs in a time unit may be numbered RO#0, RO#1, RO#2, and RO#3 from a low frequency to a high frequency.

(5) An RO set is determined based on the first indication information from the network side.

(6) An RO set is determined based on a rule configured by the second indication information from the network side or a predefined rule. For example, the second indication information may indicate that a plurality of RO sets used for PRACH transmission are determined based on the foregoing rule (1) or (2) or (3) or (4) or (5). For example, it may be predefined that a plurality of RO sets used for PRACH transmission are determined based on the foregoing rule (1) or (2) or (3) or (4) or (5).

Optionally, after the UE determines the plurality of ROs or RO sets corresponding to the number X of PRACH repetitions, the UE may repeatedly send the PRACH based on the determined ROs or RO sets.

Optionally, quantities of ROs or RO sets associated with a same SSB in different time units are the same, or frequency domain resource positions of at least some ROs or RO sets associated with a same SSB in different time units are the same.

Optionally, quantities of ROs and/or RO sets associated with a same SSB in different time units are the same, and/or frequency domain resource positions of at least some ROs and/or RO sets associated with a same SSB in different time units are the same.

Optionally, a quantity of frequency-division-multiplexed ROs or RO sets used for sending the PRACH may be set to M, a quantity of SSBs may be set to $N_{TX}^{SSB}$, and a quantity of consecutive ROs or RO sets associated with each SSB may be set to N.

Optionally, for a same SSB, quantities of frequency-division-multiplexed ROs or RO sets associated with the SSB in different time units are the same, and frequency domain resource positions are the same, including the following cases:

(1)

$$N > M;$$

(2) N is divisible by M, that is, mod(N, M) = 0;
(3)

$$N * N_{TX}^{SSB} = M;$$

(4)

$$\text{mod}(N * N_{TX}^{SSB}, M) = 0;$$

and
(5)

$$\text{mod}(M, N * N_{TX}^{SSB}) = 0.$$

Optionally, for a same SSB, quantities of frequency-division-multiplexed ROs or RO sets associated with the SSB in different time units are the same, and frequency domain resource positions of ROs or RO sets in at least some different time units are different, including the following cases:

$$N * N_{TX}^{SSB} > M \text{ and } \text{mod}(N * N_{TX}^{SSB}, M)! = 0.$$

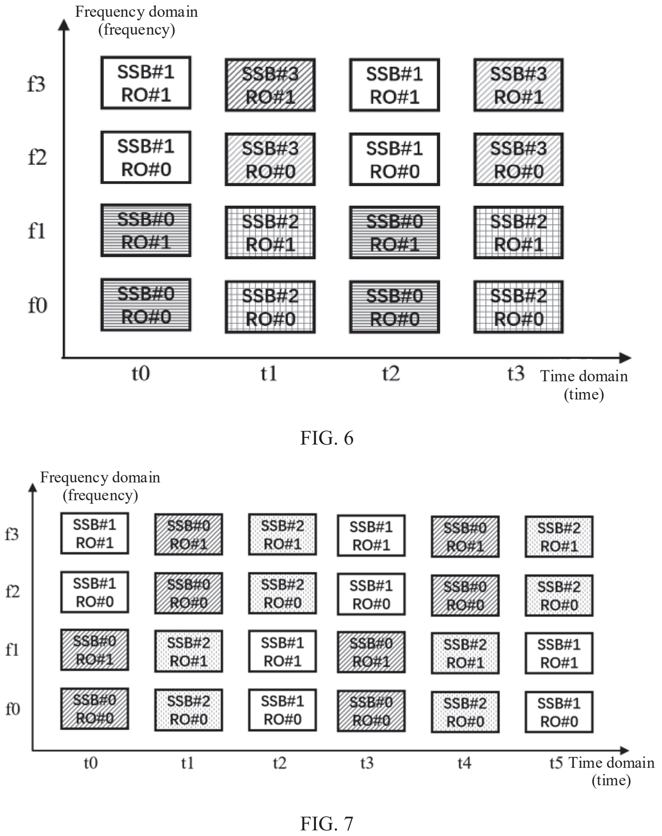

Optionally, there is a case that quantities of frequency-division-multiplexed ROs associated with a same SSB at different times are the same, and that frequency domain resource positions of associated frequency-division-multiplexed ROs are the same, or that frequency domain resource positions of frequency-division-multiplexed ROs associated with a same SSB at at least some different times are different. For example, quantities of frequency-division-multiplexed ROs associated with a same SSB at different times are the same, or frequency domain resource positions are the same or different. FIG. 6 is a first schematic diagram of an SSB-RO association according to an embodiment of this application. As shown in FIG. 6, assuming that there are four SSBs ( $N_{TX}^{SSB} = 4$ ), and that a quantity of frequency-division-multiplexed ROs is 4 (M = 4), each SSB is associated with two consecutive ROs (N = 2), and different shaded parts represent ROs associated with different SSBs. For a same time, for each SSB, ROs associated with the SSB may be sequentially indexed from a low frequency to a high frequency and numbered RO#0 and RO#1, or all ROs at a time may be numbered RO#0, RO#1, RO#2, and RO#3 from a low frequency to a high frequency. In FIG. 6, ROs are numbered for each SSB at each time. In FIG. 6, quantities of frequency-division-multiplexed ROs associated with a same SSB at different times are the same, and frequency domain resource positions are the same. In FIG. 6, ROs are represented by time-frequency domain positions. For example, t0#f0 represents an RO at a frequency domain resource position f0 and at a time t0, and t3#f0 represents an RO at a frequency domain resource position f0 and at a time t3. FIG. 7 is a second schematic diagram of an SSB-RO association according to an embodiment of this application. As shown in FIG. 7, assuming that there are three SSBs ( $N_{TX}^{SSB} = 3$ ), and that a quantity of frequency-division-multiplexed ROs is 4 (M = 4), and that each SSB is associated with two consecutive ROs (N = 2), quantities of frequency-division-multiplexed ROs associated with a same SSB at different times are the same, but frequency domain positions are different.

Using FIG. 6 and FIG. 7 as an example, RO sets corresponding to the number X of PRACH repetitions are determined among ROs corresponding to a same SSB, and the rule for determining the RO sets used for PRACH transmission may be one or more of the following:

(1) At different times, X ROs corresponding to a same SSB and located at a same frequency domain position are determined as an RO set used for PRACH transmission.
For example, assuming that the number of PRACH repetitions is 2 (X = 2), among ROs corresponding to a same SSB and located at a same frequency domain resource position and at adjacent different times, two ROs at a same frequency domain position are determined as an RO set. For example, in FIG. 6, RO set#1 = {t0#f0, t2#f0}, RO set#2 = {t0#f1, t2#f1}, RO set#3 = {t0#f2, t2#f2}, ...; for example, and in FIG. 7, RO set#1 = {t0#f0, t3#f0}, RO set#2 = {t0#f1, t3#f1}, RO set#3 = {t0#f2, t3#f2}, ....

(2) At different times, X ROs corresponding to a same SSB and located at different frequency domain positions are determined as an RO set used for PRACH transmission.

For example, among ROs corresponding to a same SSB and located at a same frequency domain position and at adjacent different times, two ROs at different frequency domain positions are determined as an RO set. For example, in FIG. 6, RO set#1 = {t0#f0, t2#f1}, RO set#2 = {t0#f1, t2#f0}, RO set#3 = {t0#f2, t2#f3}, ...; and in FIG. 7, RO set#1 = {t0#f0, t3#f1}, RO set#2 = {t0#f1, t3#f0}, RO set#3 = {t0#f2, t3#f3}, ....

(3) At different times, X ROs corresponding to a same SSB and having a same index (index) are determined as an RO set used for PRACH transmission.

For example, among ROs corresponding to a same SSB at adjacent different times, two ROs having a same index (index) are determined as an RO set. For example, in FIG. 6, RO set#1 = {t0#f0, t2#f0}, RO set#2 = {t0#f1, t2#f1}, RO set#3 = {t0#f2, t2#f2}, ...; and in FIG. 7, RO set#1 = {t0#f0, t1#f2}, RO set#2 = {t0#f1, t1#f3}, RO set#3 = {t0#f2, t2#f0}, ....

(4) At different times, X ROs corresponding to a same SSB and having different indexes (index) are determined as an RO set used for PRACH transmission.

For example, among ROs corresponding to a same SSB at adjacent different times, two ROs having different indexes (index) are determined as an RO set. For example, in FIG. 6, RO set#1 = {t0#f0, t2#f1}, RO set#2 = {t0#f1, t2#f0}, RO set#3 = {t0#f2, t2#f3}, ...; and in FIG. 7, RO set#1 = {t0#f0, t1#f3}, RO set#2 = {t0#f1, t1#f2}, RO set#3 = {t0#f2, t2#f1 }, ....

(5) An RO set used for PRACH transmission is determined based on the first indication information from the network side.

For example, an RO set may be explicitly indicated by using network configuration signaling (for example, the first indication information). For example, the network may indicate a pattern of the RO set, or explicitly indicate ROs in which time-frequency domain positions are included in the RO set, or determine the RO set by indicating RO indexes at different times and positions.

(6) An RO set used for PRACH transmission is determined based on a rule configured by the second indication information from the network side or a predefined rule. For example, the second indication information may indicate that a plurality of RO sets used for PRACH transmission are determined based on the foregoing rule (1) or (2) or (3) or (4) or (5). For example, it may be predefined that a plurality of RO sets used for PRACH transmission are determined based on the foregoing rule (1) or (2) or (3) or (4) or (5).

For example, RO sets corresponding to a same SSB are determined based on a frequency-hopping rule that is configured by a network or predefined. It is assumed that the configured or predefined frequency-hopping rule is: for ROs corresponding to the same SSB and located at adjacent different time domain positions, a frequency-hopping step is 1, that is, every time the PRACH is sent, frequency hopping is performed once, and a frequency-hopping offset is one RO. In FIG. 6, RO set#1 = {t0#f0, t2#f1}, RO set#2 = {t0#f1, t2#f0}, RO set#3 = {t0#f2, t2#f3}, ...; and in FIG. 7, RO set#1 = {t0#f0, t1#f3}, RO set#2 = {t0#f1, t1#f2}, RO set#3 = {t0#f2, t2#f1}, ....

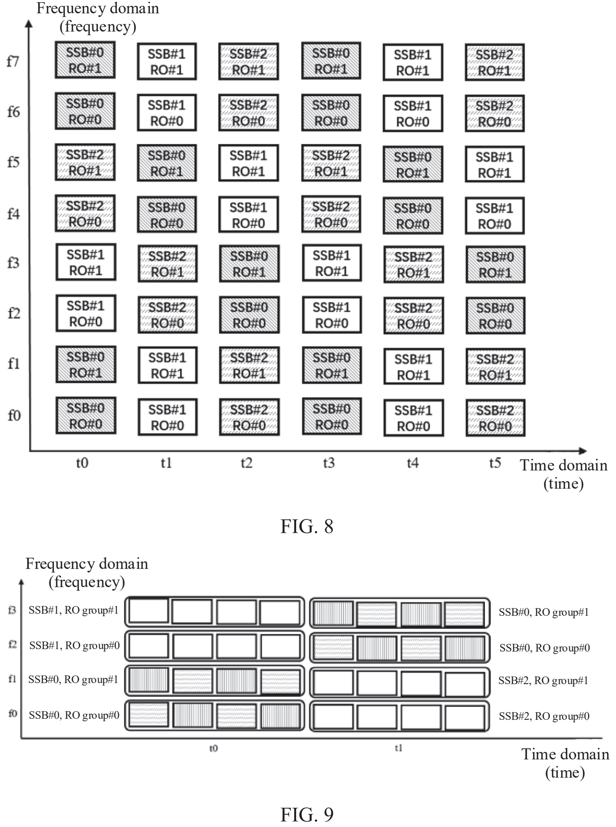

Optionally, an SSB may be associated with an RO set, and the RO set associated with the SSB may be determined in advance, that is, configured RO resources are determined as an RO set first, and then the SSB is associated with the RO set. FIG. 9 is a fourth schematic diagram of an SSB-RO association according to an embodiment of this application. Using FIG. 9 as an example, a quantity of SSBs is 3 ($N_{TX}^{SSB} = 3$), a quantity of frequency-division-multiplexed RO sets is 4 (M = 4), and each SSB is associated with two consecutive RO sets (N = 2). Quantities of RO sets associated with a same SSB in different time units are the same. For example, quantities of RO sets associated with SSB#0 in a time unit t0 and a time unit t1 are both 2. In FIG. 9, RO sets are numbered for each SSB in each time unit.

Using FIG. 9 as an example, a time unit may include four times, and any RO set associated with an SSB includes four ROs respectively corresponding to the four times. Among RO sets corresponding to a same SSB, a plurality of RO sets corresponding to the number X of PRACH repetitions are determined, and the rule for determining an RO set used for PRACH transmission may be one or more of the following:

(1) At different times in a same time unit, X ROs corresponding to a same SSB and located at a same frequency domain position are determined as an RO set used for PRACH transmission.

For example, in an RO set corresponding to a time unit t0 in FIG. 9, four ROs in RO group#0 corresponding to SSB#0 are determined for PRACH transmission.

(2) At different times in a same time unit, X ROs corresponding to a same SSB and located at different frequency domain positions are determined as an RO set used for PRACH transmission.

For example, in an RO set corresponding to a time unit t0 in FIG. 9, a first RO and a third RO in RO group#0 corresponding to SSB#0, and a second RO and a fourth RO in RO group#1 corresponding to SSB#0 are used for PRACH transmission.

(3) At different times in a same time unit, X ROs corresponding to a same SSB and having a same index (index) are determined as an RO set used for PRACH transmission.

For example, in an RO set corresponding to a time unit t0 in FIG. 9, four ROs in RO group#0 corresponding to SSB#0 are determined for PRACH transmission.

(4) At different times in a same time unit, X ROs corresponding to a same SSB and having different indexes (index) are determined as an RO set used for PRACH transmission.

For example, in an RO set corresponding to a time unit t0 in FIG. 9, a first RO and a third RO in RO group#0 corresponding to SSB#0, and a second RO and a fourth RO in RO group#1 corresponding to SSB#0 are used for PRACH transmission.

The indexes may be frequency domain resource indexes that are sequentially numbered from a low frequency to a high frequency or from a high frequency to a low frequency in frequency domain only for different frequency-division-multiplexed ROs mapped to the same SSB in a same time unit; or the indexes may be frequency domain resource indexes that are sequentially numbered from a low frequency to a high frequency or from a high frequency to a low frequency in frequency domain for all ROs in a same time unit. For example, for a same time unit, for each SSB, ROs associated with the SSB may be indexed from a low frequency to a high frequency and numbered RO#0 and RO#1 (for example, the SSB is associated with two ROs in a time unit), or all ROs in a time unit may be numbered RO#0, RO#1, RO#2, and RO#3 from a low frequency to a high frequency.

(5) An RO set used for PRACH transmission is determined based on the first indication information from the network side.

(6) An RO set used for PRACH transmission is determined based on a rule configured by the second indication information from the network side or a predefined rule. For example, the second indication information may indicate that a plurality of RO sets used for PRACH transmission are determined based on the foregoing rule (1) or (2) or (3) or (4) or (5). For example, it may be predefined that a plurality of RO sets used for PRACH transmission are determined based on the foregoing rule (1) or (2) or (3) or (4) or (5).

For example, a second RO set may be determined among different RO sets in a same time unit based on a frequency-hopping rule that is configured by the network or predefined. For example, for SSB#0, ROs corresponding to a same shape, between RO group#0 and RO group#1 corresponding to a time unit t0 in FIG. 9, may be determined as an RO set used for PRACH transmission, and the UE uses the RO set used for PRACH transmission to send the PRACH.

Optionally, quantities of ROs or RO sets associated with a same SSB in different time units are not completely the same, or frequency domain resource positions of at least some ROs or RO sets associated with a same SSB in different time units are different.

Optionally, quantities of ROs and/or RO sets associated with a same SSB in different time units are not completely the same, and/or frequency domain resource positions of at least some ROs and/or RO sets associated with a same SSB in different time units are different.

Optionally, for a same SSB, quantities of frequency-division-multiplexed ROs or RO sets associated with the SSB in at least some different time units are different, and frequency domain resource positions are different, including the following cases:

$$ N * N_{TX}^{SSB} < M \text{ and } \mathrm{mod}(M, N * N_{TX}^{SSB}) \mathrel{!=} 0. $$

Optionally, that a terminal determines, based on ROs or RO sets respectively associated with at least one SSB, ROs or RO sets used for PRACH transmission includes:

the terminal determines, based on ROs or RO sets respectively corresponding to a first SSB in P time units corresponding to a same quantity of ROs or RO sets, the ROs or RO sets used for PRACH transmission; or
the terminal determines, based on ROs or RO sets respectively corresponding to a first SSB in P time units corresponding to different quantities of ROs or RO sets, the ROs or RO sets used for PRACH transmission, where P is an integer greater than or equal to 1.

Optionally, that a terminal determines, based on ROs and/or RO sets respectively associated with at least one SSB, ROs and/or RO sets used for PRACH transmission includes:

the terminal determines, based on ROs and/or RO sets respectively corresponding to a first SSB in P time units corresponding to a same quantity of ROs and/or RO sets, the ROs and/or RO sets used for PRACH transmission; or
the terminal determines, based on ROs and/or RO sets respectively corresponding to a first SSB in P time units corresponding to different quantities of ROs and/or RO sets, the ROs and/or RO sets used for PRACH transmission, where
P is an integer greater than or equal to 1.

Optionally, that the terminal determines, based on ROs and/or RO sets respectively corresponding to a first SSB in P time units corresponding to a same quantity of ROs and/or RO sets, the ROs and/or RO sets used for PRACH transmission may be that the ROs and/or RO sets respectively corresponding to the first SSB in each time unit are originally the same.

For example, if quantities of ROs respectively associated with the first SSB at three times t1, t2, and t3 are all 2, ROs at two different times may be selected for sending the PRACH from the ROs respectively associated with the first SSB at the three times t1, t2, and t3. For a specific selection rule, refer to any one or more of the foregoing determining rules (1) to (6). This is not limited in the embodiments of this application.

For another example, if quantities of RO sets respectively associated with the first SSB in three time units t1, t2, and t3 are all 2, RO sets in two different time units may be selected from the RO sets respectively associated with the first SSB in the three time units t1, t2, and t3, and it is further determined, based on the frequency-hopping rule, ROs used for sending the PRACH. For example, an RO set corresponding to a time unit is determined, and two ROs corresponding to different times are determined from the RO set; or two RO sets associated with a same SSB and corresponding to a time unit are determined, and one RO is determined from each of the two RO sets, corresponds to a different time, and is used for sending the PRACH. This is not limited in the embodiments of this application.

Alternatively, if ROs and/or RO sets respectively corresponding to the first SSB in each time unit are not completely the same, it may be specified that only ROs and/or RO sets having a same quantity of frequency-division-multiplexed ROs and/or RO sets associated with a same SSB in different time units can be selected as an RO set used for sending the PRACH. An RO and/or RO set used for PRACH transmission can be determined from a same quantity of ROs and/or RO sets respectively corresponding to the first SSB in the P time units.

For example, if quantities of ROs respectively associated with the first SSB at a time t1 and a time t2 are both 2, and quantities of ROs respectively associated with the first SSB at a time t3 and a time t4 are both 4, ROs at two different times may be selected for sending the PRACH from the ROs respectively associated with the first SSB at t1 and t2. For a specific selection rule, refer to any one or more of the foregoing determining rules (1) to (6). This is not limited in the embodiments of this application. Alternatively, ROs at two different times may be selected for sending the PRACH from the ROs respectively associated at t3 and t4. For a specific selection rule, refer to any one or more of the foregoing determining rules (1) to (6). This is not limited in the embodiments of this application. However, it is impossible to select ROs at two different times for sending the PRACH from ROs respectively associated at t1 and t3, or t1 and t4, or t2 and t3, or t2 and t4.

For another example, if quantities of RO sets respectively associated with the first SSB in a time unit t1 and a time unit t2 are both 2, and quantities of RO sets respectively associated with the first SSB in a time unit t3 and a time unit t4 are both 4, RO sets in two different time units may be selected from the RO sets respectively associated with the first SSB in t1 and t2, and further, an RO may be determined, based on the frequency-hopping rule, for sending the PRACH. For example, an RO set corresponding to a time unit is determined from the RO sets, and two ROs corresponding to different times are determined from the RO set; or two RO sets associated with a same SSB and corresponding to a time unit are determined from the RO sets, and one RO is determined from each of the two RO sets, and corresponds to a different time. Alternatively, ROs in RO sets in two different time units may be selected from ROs respectively associated in t3 and t4, for sending the PRACH. For example, an RO set corresponding to a time unit is determined from the RO sets, and two ROs corresponding to different times are determined from the RO set; or two RO sets associated with a same SSB and corresponding to one time unit are determined from the RO sets, and one RO is determined from each of the two RO sets, corresponds to a different time, and is used for sending the PRACH.

Optionally, that the terminal determines, based on ROs and/or RO sets respectively corresponding to a first SSB in P time units corresponding to different quantities of ROs and/or RO sets, the ROs and/or RO sets used for PRACH transmission may be that ROs and/or RO sets respectively corresponding to the first SSB in each time unit are not completely the same. In this case, it may be specified that ROs and/or RO sets having a same quantity of frequency-division-multiplexed ROs associated with different SSBs in different time units may be selected as an RO set used for sending the PRACH.

For example, if quantities of ROs respectively associated with the first SSB at a time t1 and a time t2 are both 2, and quantities of ROs respectively associated with the first SSB at a time t3 and a time t4 are both 4, ROs at two different times from t1, t2, t3, and t4 may be selected for sending the PRACH. For a specific selection rule, refer to any one or more of the foregoing determining rules (1) to (6). This is not limited in the embodiments of this application.

For another example, if quantities of RO sets respectively associated with the first SSB in a time unit t1 and a time unit t2 are both 2, and quantities of RO sets respectively associated with the first SSB in a time unit t3 and a time unit t4 are both 4, RO sets in two different time units from t1, t2, t3, and t4 may be selected, and further, ROs are determined, based on the frequency-hopping rule, for sending the PRACH. For example, an RO set corresponding to a time unit is determined from the RO sets, and two ROs corresponding to different times are determined from the RO set; or two RO sets associated with a same SSB and corresponding to a time unit are determined from the RO sets, and one RO is determined from each of the two RO sets, corresponds to a different time, and is used for sending the PRACH.

It should be noted that, in a case that an SSB is associated with an RO set, after RO sets in two different time units are selected for sending the PRACH, ROs may be selected, from the determined RO sets in the two different time units based on the frequency-hopping rule, for sending the PRACH. For example, after RO sets in two different time units from t1, t2, t3, and t4 are selected, ROs may be selected, from the determined RO sets in the two different time units based on the frequency-hopping rule, for sending the PRACH.

That the terminal determines, based on ROs or RO sets respectively corresponding to a first SSB in P time units corresponding to a same quantity of ROs or RO sets, the ROs or RO sets used for PRACH transmission includes:

in a case that quantities of ROs or RO sets respectively corresponding to the first SSB in at least two time units are different, the terminal classifies ROs or RO sets respectively corresponding to the at least two time units into at least two categories of ROs or RO sets, where in any category of ROs or RO sets, quantities of ROs or RO sets respectively corresponding to the first SSB in different time units are the same; and

the terminal determines, based on ROs or RO sets that are in any category of ROs or RO sets and respectively corresponding to the first SSB in the P time units, the ROs or RO sets used for PRACH transmission.

Optionally, that the terminal determines, based on ROs and/or RO sets respectively corresponding to a first SSB in P time units corresponding to a same quantity of ROs and/or RO sets, the ROs and/or RO sets used for PRACH transmission includes:

in a case that quantities of ROs and/or RO sets respectively corresponding to the first SSB in at least two time units are different, the terminal classifies ROs and/or RO sets respectively corresponding to the at least two time units into at least two categories of ROs and/or RO sets, where in any category of ROs and/or RO sets, quantities of ROs and/or RO sets respectively corresponding to the first SSB in different time units are the same; and

the terminal determines, based on ROs and/or RO sets that are in any category of ROs and/or RO sets and respectively corresponding to the first SSB in the P time units, the ROs and/or RO sets used for PRACH transmission.

Optionally, it may be specified that only ROs and/or RO sets having a same quantity of frequency-division-multiplexed ROs and/or RO sets associated with a same SSB in different time units can be selected as an RO set used for sending the PRACH. In other words, ROs and/or RO sets having different quantities of frequency-division-multiplexed ROs and/or RO sets associated with a same SSB are classified into different categories. Determining of an RO group used for sending the PRACH can be performed only between ROs and/or RO sets in a same category.

For example, if quantities of ROs respectively associated with the first SSB at a time t1 and a time t2 are both 2, and quantities of ROs respectively associated with the first SSB at a time t3 and a time t4 are both 4, the ROs respectively associated with the first SSB at t1 and t2 may be used as a first category, and the ROs respectively associated with the first SSB at t3 and t4 may be used as a second category. In this case, ROs at two different times may be selected for sending the PRACH from the first category of ROs. For a specific selection rule, refer to any one or more of the foregoing determining rules (1) to (6). This is not limited in the embodiments of this application. Alternatively, ROs at two different times may be selected for sending the PRACH from the second category of ROs. For a specific selection rule, refer to any one or more of the foregoing determining rules (1) to (6). This is not limited in the embodiments of this application. However, it is impossible to select one RO for sending the PRACH from each of the first category and the second category.

For another example, if quantities of RO sets respectively associated with the first SSB in a time unit t1 and a time unit t2 are both 2, and quantities of RO sets respectively associated with the first SSB in a time unit t3 and a time unit t4 are both 4, the RO sets respectively associated with the first SSB in t1 and t2 may be used as a first category, and the RO sets respectively associated with the first SSB in t3 and t4 may be used as a second category. In this case, RO sets in two different time units may be selected from the first category of RO sets, and further, ROs are determined, based on the frequency-hopping rule, for sending the PRACH. For example, an RO set corresponding to a time unit is determined from the first category of RO sets, and two ROs corresponding to different times are determined from the RO set; or two RO sets associated with a same SSB and corresponding to a time unit are determined from the first category of RO sets, and one RO is determined from each of the two RO sets, and corresponds to a different time. Alternatively, RO sets in two different time units may be selected from the second category of RO sets, and further, ROs are determined, based on the frequency-hopping rule, for sending the PRACH. For example, an RO set corresponding to a time unit is determined from the second category of RO sets, and two ROs corresponding to different times are determined from the RO set; or two RO sets associated with a same SSB and corresponding to a time unit are determined from the second category of RO sets, and one RO is determined from each of the two RO sets, corresponds to a different time, and is used for sending the PRACH.

It should be noted that, in a case that an SSB is associated with an RO set, after RO sets in two different time units are selected for sending the PRACH, ROs may be selected, from the determined RO sets in the two different time units based on the frequency-hopping rule, for sending the PRACH. For example, after RO sets in two different time units are selected from the first category of RO sets, ROs may be selected, from the determined RO sets in the two different time units based on the frequency-hopping rule, for sending the PRACH.

Optionally, that the terminal determines, based on ROs or RO sets respectively corresponding to a first SSB in P time units corresponding to a same quantity of ROs or RO sets, the ROs or RO sets used for PRACH transmission includes: determining, based on different rules, the ROs or RO sets used for PRACH transmission respectively from the at least two categories of ROs or RO sets.

Optionally, that the terminal determines, based on ROs and/or RO sets respectively corresponding to a first SSB in P time units corresponding to a same quantity of ROs and/or RO sets, the ROs and/or RO sets used for PRACH transmission includes:

determining, based on different rules, the ROs and/or RO sets used for PRACH transmission respectively from the at least two categories of ROs and/or RO sets.

Optionally, for different categories of ROs, rules for selecting ROs at two different times for sending the PRACH may be different. For example, if quantities of ROs respectively associated with the first SSB at a time t1 and a time t2 are both 2, and quantities of ROs respectively associated with the first SSB at a time t3 and a time t4 are both 4, the ROs respectively associated with the first SSB at t1 and t2 may be used as a first category, and the ROs respectively associated with the first SSB at t3 and t4 may be used as a second category. With reference to any one or more of the foregoing determining rules (1) to (6), ROs at two different times may be selected for sending the PRACH from the first category of ROs. Alternatively, with reference to any one or more of the foregoing determining rules (1) to (6) (as long as the rule is different from that referenced in the first category), ROs at two different times may be selected for sending the PRACH from the second category of ROs. For example, with reference to the foregoing determining rule (1), ROs at two different times may be selected for sending the PRACH from the first category of ROs, or with reference to the foregoing determining rule (6), ROs at two different times may be selected for sending the PRACH from the second category of ROs.

Optionally, for different categories of RO sets, rules for selecting RO sets at two different times for sending the PRACH may be different. For example, if quantities of RO sets respectively associated with the first SSB in a time unit t1 and a time unit t2 are both 2, and quantities of RO sets respectively associated with the first SSB in a time unit t3 and a time unit t4 are both 4, the RO sets respectively associated with the first SSB in t1 and t2 may be used as a first category, and the RO sets respectively associated with the first SSB in t3 and t4 may be used as a second category. An RO set corresponding to a time unit may be determined from the first category, and two ROs corresponding to different times may be determined from the RO set. Alternatively, two RO sets associated with a same SSB and corresponding to a time unit are determined from the second category, and one RO is determined from each of the two RO sets, corresponds to a different time, and is used for sending the PRACH.

Optionally, that the terminal determines, based on ROs or RO sets respectively corresponding to a first SSB in P time units corresponding to different quantities of ROs or RO sets, the ROs or RO sets used for PRACH transmission includes:

the terminal determines Q ROs or RO sets from ROs or RO sets corresponding to the first SSB in a first time unit, where Q is an integer greater than or equal to 1, Q is determined based on a smaller one of quantities of ROs or RO sets respectively corresponding to the first SSB in the P time units, and the first time unit is a time unit that is in the P time units and in which a quantity of ROs or RO sets corresponding to the first SSB is larger than quantities of ROs or RO sets corresponding to the first SSB in other time units in the P time units; and
the terminal determines, based on the Q ROs or RO sets, and the ROs or RO sets corresponding to the first SSB in the other time units, the ROs or RO sets used for PRACH transmission.

Optionally, that the terminal determines, based on ROs and/or RO sets respectively corresponding to a first SSB in P time units corresponding to different quantities of ROs and/or RO sets, the ROs and/or RO sets used for PRACH transmission includes:

the terminal determines Q ROs and/or RO sets from ROs and/or RO sets corresponding to the first SSB in a first time unit, where Q is an integer greater than or equal to 1, Q is determined based on a smaller one of quantities of ROs and/or RO sets respectively corresponding to the first SSB in the P time units, and the first time unit is a time unit that is in the P time units and in which a quantity of ROs and/or RO sets corresponding to the first SSB is larger than quantities of ROs and/or RO sets corresponding to the first SSB in other time units in the P time units; and
the terminal determines, based on the Q ROs and/or RO sets, and the ROs and/or RO sets corresponding to the first SSB in the other time units, the ROs and/or RO sets used for PRACH transmission.

For example, if quantities of ROs respectively associated with the first SSB at a time t1 and a time t2 are both 2, and quantities of ROs respectively associated with the first SSB at a time t3 and a time t4 are both 4, two ROs may be selected from the four ROs associated with the first SSB at t3. Therefore, with reference to any one or more of the foregoing determining rules (1) to (6), ROs at two different times are selected for sending the PRACH from the two ROs associated with the first SSB at t1 and the two selected ROs associated with the first SSB at t3.

For example, if quantities of RO sets respectively associated with the first SSB in a time unit t1 and a time unit t2 are both 2, and quantities of RO sets respectively associated with the first SSB in a time unit t3 and a time unit t4 are both 4, two RO sets may be selected from the four RO sets associated with the first SSB in t4. Therefore, with reference to any one or more of the foregoing determining rules (1) to (6), RO sets in two different time units are selected from the two RO sets associated with the first SSB in t1 and the two selected RO sets associated with the first SSB in t4, and further, ROs are determined, based on the frequency-hopping rule, for sending the PRACH. For example, an RO set corresponding to a time unit is determined from the RO sets, and two ROs corresponding to different times are determined from the RO set; or two RO sets associated with a same SSB and corresponding to a time unit are determined from the RO sets, and one RO is determined from each of the two RO sets, corresponds to a different time, and is used for sending the PRACH.

Optionally, that the terminal determines Q ROs or RO sets from ROs or RO sets corresponding to the first SSB in a first time unit includes:

the terminal determines that first Q or last Q ROs or RO sets or Q ROs or RO sets at preset positions among the ROs or RO sets corresponding to the first SSB in the first time unit are the Q ROs or RO sets.

Optionally, that the terminal determines Q ROs and/or RO sets from ROs and/or RO sets corresponding to the first SSB in a first time unit includes:

the terminal determines that first Q or last Q ROs and/or RO sets or Q ROs and/or RO sets at preset positions among the ROs and/or RO sets corresponding to the first SSB in the first time unit are the Q ROs and/or RO sets.

For example, if quantities of ROs respectively associated with the first SSB at a time t1 and a time t2 are both 2, and quantities of ROs respectively associated with the first SSB at a time t3 and a time t4 are both 4, first two or last two ROs or two ROs at preset positions may be selected from the four ROs associated with the first SSB at t3. Therefore, with reference to any one or more of the foregoing determining rules (1) to (6), ROs at two different times are selected for sending the PRACH from the two ROs associated with the first SSB at t1 and the two selected ROs associated with the first SSB at t3.

For example, if quantities of RO sets respectively associated with the first SSB in a time unit t1 and a time unit t2 are both 2, and quantities of RO sets respectively associated with the first SSB in a time unit t3 and a time unit t4 are both 4, first two or last two RO sets or two RO sets at preset positions may be selected from the four RO sets associated with the first SSB in t3. Therefore, with reference to any one or more of the foregoing determining rules (1) to (6), RO sets in two different time units are selected from the two RO sets associated with the first SSB in t1 and the two selected RO sets associated with the first SSB in t3, and further, ROs are determined, based on the frequency-hopping rule, for sending the PRACH. For example, an RO set corresponding to a time unit is determined from the RO sets, and two ROs corresponding to different times are determined from the RO set; or two RO sets associated with a same SSB and corresponding to a time unit are determined from the RO sets, and one RO is determined from each of the two RO sets, corresponds to a different time, and is used for sending the PRACH.

Optionally, the first Q ROs and/or RO sets may be first Q ROs and/or RO sets sorted in ascending or descending order of frequencies.

Optionally, the last Q ROs and/or RO sets may be last Q ROs and/or RO sets sorted in ascending or descending order of frequencies.

Optionally, the Q ROs and/or RO sets at preset positions may be Q ROs and/or RO sets at preset positions sorted in ascending or descending order of frequencies.

Optionally, the determining ROs or RO sets used for PRACH transmission includes any one of the following:

the terminal determines that the ROs or RO sets used for PRACH transmission include ROs or RO sets located at different times and at a same frequency domain position among ROs or RO sets corresponding to a first SSB;
the terminal determines that the ROs or RO sets used for PRACH transmission include ROs or RO sets located at different times and at different frequency domain positions among ROs or RO sets corresponding to a first SSB;
the terminal determines that the ROs or RO sets used for PRACH transmission include ROs or RO sets located at different times and indicated by a same index among ROs or RO sets corresponding to a first SSB;
the terminal determines that the ROs or RO sets used for PRACH transmission include ROs or RO sets located at different times and indicated by different indexes among ROs or RO sets corresponding to a first SSB;
the terminal determines, based on first indication information from a network side, the ROs or RO sets used for PRACH transmission from the ROs or RO sets respectively associated with the at least one SSB, where the first indication information is used to indicate positions of the ROs or RO sets used for PRACH transmission; and
the terminal determines, based on second indication information from a network side, the ROs or RO sets used for PRACH transmission from the ROs or RO sets respectively associated with the at least one SSB, where the second indication information is used to indicate a rule for determining the ROs or RO sets used for PRACH transmission, where

the first SSB is any one of the at least one SSB, and a time unit includes one or more times.

Optionally, the determining ROs and/or RO sets used for PRACH transmission includes any one of the following:

the terminal determines that the ROs and/or RO sets used for PRACH transmission include ROs and/or RO sets located at different times and at a same frequency domain position among ROs and/or RO sets corresponding to a first SSB;
the terminal determines that the ROs and/or RO sets used for PRACH transmission include ROs and/or RO sets located at different times and at different frequency domain positions among ROs and/or RO sets corresponding to a first SSB;
the terminal determines that the ROs and/or RO sets used for PRACH transmission include ROs and/or RO sets located at different times and indicated by a same index among ROs and/or RO sets corresponding to a first SSB;
the terminal determines that the ROs and/or RO sets used for PRACH transmission include ROs and/or RO sets located at different times and indicated by different indexes among ROs and/or RO sets corresponding to a first SSB;
the terminal determines, based on first indication information from a network side, the ROs and/or RO sets used for PRACH transmission from the ROs and/or RO sets respectively associated with the at least one SSB, where the first indication information is used to indicate positions of the ROs and/or RO sets used for PRACH transmission; and
the terminal determines, based on second indication information from a network side, the ROs and/or RO sets used for PRACH transmission from the ROs and/or RO sets respectively associated with the at least one SSB, where the second indication information is used to indicate a rule for determining the ROs and/or RO sets used for PRACH transmission, where
the first SSB is any one of the at least one SSB, and a time unit includes one or more times.

In the embodiments of this application, an SSB may be associated with an RO, and a time unit may be a time or any other time length. This is not limited in the embodiments of this application.
Optionally, in a case that an SSB may be associated with an RO, and that a time unit may be a time or any other time length, quantities of frequency-division-multiplexed ROs associated with an SSB at at least some different times are different and frequency domain positions are different. The rule for determining the RO sets used for PRACH transmission may be one or more of the following:

(1) At different times, X ROs corresponding to a same SSB and located at a same frequency domain position are determined as an RO set used for PRACH transmission.
(2) At different times, X ROs corresponding to a same SSB and located at different frequency domain positions are determined as an RO set used for PRACH transmission.
(3) At different times, X ROs corresponding to a same SSB and having a same index (index) are determined as an RO set used for PRACH transmission.
(4) At different times, X ROs corresponding to a same SSB and having different indexes (index) are determined as an RO set used for PRACH transmission.
The indexes may be frequency domain resource indexes that are sequentially numbered from a low frequency to a high frequency or from a high frequency to a low frequency in frequency domain only for different frequency-division-multiplexed ROs mapped to the same SSB at a same time; or the indexes may be frequency domain resource indexes that are sequentially numbered from a low frequency to a high frequency or from a high frequency to a low frequency in frequency domain for all ROs at a same time. For example, for a same time, for each SSB, ROs associated with the SSB may be indexed from a low frequency to a high frequency and numbered RO#0 and RO#1 (for example, the SSB is associated with two ROs at a time), or all ROs at a time may be numbered RO#0, RO#1, RO#2, and RO#3 from a low frequency to a high frequency.
(5) An RO set used for PRACH transmission is determined based on the first indication information from the network side.
(6) An RO set is determined based on a rule configured by the second indication information from the network side or a predefined rule. For example, the second indication information may indicate that a plurality of ROs or RO sets used for PRACH transmission are determined based on the foregoing rule (1) or (2) or (3) or (4) or (5). For example, it may be predefined that a plurality of ROs or RO sets used for PRACH transmission are determined based on the foregoing rule (1) or (2) or (3) or (4) or (5).
(7) The terminal determines Q ROs from ROs corresponding to the first SSB at a first time. For example, at a time at which a quantity of frequency-division-multiplexed ROs is larger (N1), ROs as many as those at a time at which a quantity of ROs is smaller (Q = N2) are selected. An RO selection method may be based on one or more of the following:

(7.1) selecting N2 ROs based on a network configuration, for example, selecting by indicating indexes (index) corresponding to a same SSB, or selecting based on a pattern (pattern) configured by the network; and
(7.2) selecting based on a predefined rule, for example, selecting first N2 ROs in an order of indexes (index) corresponding to a same SSB, or selecting last N2 ROs.

Then, from ROs selected at a time domain position at which there are a larger quantity of ROs, and ROs at a time at which there are a smaller quantity of ROs, ROs and/or RO sets used for PRACH transmission are determined based on the foregoing rule (1) or (2) or (3) or (4) or (5) or (6).

(8) It may be specified that only ROs having a same quantity of frequency-division-multiplexed ROs associated with a same SSB at different times can be selected as an RO set used for sending the PRACH. In other words, ROs having different quantities of frequency-division-multiplexed ROs associated with a same SSB are classified into different categories. Determining of an RO group used for sending the PRACH can be performed only between ROs in a same category.

(9) PRACH transmission with repetitions may not be supported, that is, determining of an RO set is not required.

The UE sends the PRACH based on the determined RO set.

In an embodiment, FIG. 8 is a third schematic diagram of an SSB-RO association according to an embodiment of this application. As shown in FIG. 8, quantities of frequency-division-multiplexed ROs associated with a same SSB at at least some different times are different and frequency domain resource positions are different. Assuming that there are three SSBs ( $N_{TX}^{SSB} = 3$ ), and that a quantity of frequency-division-multiplexed ROs is 8 (M = 8), and that each SSB is associated with two consecutive ROs (N = 2), quantities of frequency-division-multiplexed ROs associated with a same SSB at different times are different and frequency domain resource positions are different. For a same time, for each SSB, ROs associated with the SSB may be indexed from a low frequency to a high frequency and numbered RO#0 and RO#1, or all ROs at a time may be numbered RO#0, RO#1, RO#2, ..., RO#7 from a low frequency to a high frequency. In FIG. 8, ROs are numbered for each SSB at each time.

Using FIG. 8 as an example, among RO sets corresponding to a same SSB, a plurality of RO sets corresponding to the number X of PRACH repetitions are determined, and the rule for determining an RO set used for PRACH transmission may be one or more of the following (merely as an example, not as a limitation on the rule for determining the RO set for PRACH transmission):

(1) At different times, X ROs corresponding to a same SSB and located at a same frequency domain position are determined as an RO set used for PRACH transmission.
For example, if determining of an RO set is supported, assuming that the number of PRACH repetitions is 2 (X = 2), among ROs corresponding to a same SSB and located at a same frequency domain resource position and at adjacent different times, two ROs at the same frequency domain resource position are determined as an RO set. For example, in FIG. 8, RO set#1 = {t0#f0, t3#f0}, RO set#2 = {t0#f1, t3#f1}, and RO set#3 = {t0#f2, t3#f2}.
(2) At different times, X ROs corresponding to a same SSB and located at different frequency domain positions are determined as an RO set used for PRACH transmission.
(3) At different times, X ROs corresponding to a same SSB and having a same index (index) are determined as an RO set used for PRACH transmission.
For example, among ROs corresponding to a same SSB and having a same quantity of frequency-division-multiplexed ROs at adjacent different times, ROs having different indexes (index) are determined as an RO set. For example, RO set#1 = {t0#f0, t3#f1}, RO set#2 = {t0#f1, t3#f6}, RO set#3 = {t0#f2, t2#f5}, RO set#4 = {t0#f3, t2#f4}, ....
(4) At different times, X ROs corresponding to a same SSB and having different indexes (index) are determined as an RO set used for PRACH transmission.
The indexes may be frequency domain resource indexes that are sequentially numbered from a low frequency to a high frequency or from a high frequency to a low frequency in frequency domain only for different frequency-division-multiplexed ROs mapped to the same SSB at a same time; or the indexes may be frequency domain resource indexes that are sequentially numbered from a low frequency to a high frequency or from a high frequency to a low frequency in frequency domain for all ROs at a same time. For example, for a same time, for each SSB, ROs associated with the SSB may be indexed from a low frequency to a high frequency and numbered RO#0 and RO#1 (for example, the SSB is associated with two ROs at a time), or all ROs at a time may be numbered RO#0, RO#1, RO#2, and RO#3 from a low frequency to a high frequency.
(5) An RO set used for PRACH transmission is determined based on the first indication information from the network side.
For example, how an RO set is determined is explicitly indicated by using network configuration signaling. For example, the network may indicate a pattern of the RO set, or explicitly indicate ROs at which time-frequency domain positions are included in the RO set, or determine the RO set by indicating RO indexes.

(6) An RO set used for PRACH transmission is determined based on a rule configured by the second indication information from the network side or a predefined rule. For example, the second indication information may indicate that a plurality of ROs or RO sets used for PRACH transmission are determined based on the foregoing rule (1) or (2) or (3) or (4) or (5). For example, it may be predefined that a plurality of ROs or RO sets used for PRACH transmission are determined based on the foregoing rule (1) or (2) or (3) or (4) or (5).

For example, RO sets corresponding to a same SSB are determined based on a frequency-hopping rule that is configured by the network or predefined. Assuming that the configured or predefined frequency-hopping rule is: a frequency-hopping step is 1, a frequency-hopping offset is two ROs, and frequency hopping can be performed only at adjacent times at which quantities of frequency-division-multiplexed ROs are the same. In FIG. 8, RO set#1 = {t0#f0, t3#f6}, RO set#2 = {t0#f1, t3#f7}, RO set#3 = {t0#f6, t3#f0}, RO set#4 = {t0#f7, t3#f1}, ....

(7) The terminal determines Q ROs from ROs corresponding to the first SSB at a first time. For example, at a time at which a quantity of frequency-division-multiplexed ROs is larger (N1), ROs as many as those at a time at which a quantity of ROs is smaller (Q = N2) are selected. An RO selection method may be based on one or more of the following:

(7.1) selecting N2 ROs based on a network configuration, for example, selecting by indicating indexes (index) corresponding to a same SSB, or selecting based on a pattern (pattern) configured by the network; and
(7.2) selecting based on a predefined rule, for example, selecting first N2 ROs in an order of indexes (index) corresponding to a same SSB, or selecting last N2 ROs.

Then, from ROs selected at a time domain position at which there are a larger quantity of ROs, and ROs at a time at which there are a smaller quantity of ROs, ROs and/or RO sets used for PRACH transmission are determined based on the foregoing rule (1) or (2) or (3) or (4) or (5) or (6).

For example, first, at a time at which a quantity of frequency-division-multiplexed ROs is larger, ROs as many as those at a time at which a quantity of ROs is smaller are selected. For example, in FIG. 8, four ROs at a time t0 in a first column correspond to SSB#0, and two ROs at a time t1 in a second column correspond to SSB#0. For SSB#0, two ROs are selected from the corresponding four ROs in the first column. For example, the ROs may be selected based on a predefined rule or RO indexes indicated by network configuration signaling. For example, first two ROs (t0#f0, t0#f1) or last two ROs (t0#f6, t0#f7) are selected in an order of RO indexes. The two selected ROs are renumbered RO#0 and RO#1. Then an RO set is determined based on the foregoing method.

(8) It may be specified that only ROs having a same quantity of frequency-division-multiplexed ROs associated with a same SSB at different times can be selected as an RO set used for sending the PRACH. In other words, ROs having different quantities of frequency-division-multiplexed ROs associated with a same SSB are classified into different categories. Determining of an RO group used for sending the PRACH can be performed only between ROs in a same category. For example, in FIG. 8, RO set#1 = {t0#f0, t3#f0}, RO set#2 = {t0#f1, t3#f1}, RO set#3 = {t0#f2, t2#f4}, RO set#4 = {t0#f3, t2#f5}, ....

(9) PRACH transmission with repetitions may not be supported, that is, determining of an RO set is not required.

The UE sends the PRACH based on the determined RO set.

Optionally, an SSB may be associated with an RO set, and any one of the at least one SSB corresponds to an RO set including ROs at R adjacent times and at a same frequency domain position, where R is an integer greater than or equal to 1.

Optionally, an SSB may be associated with an RO set, any one of the at least one SSB corresponds to an RO set including ROs at R adjacent times and at a same frequency domain position, the RO set associated with the SSB may be determined in advance, a time unit may include a plurality of times, and any RO set associated with the SSB includes a plurality of ROs at the plurality of times.

Optionally, in a case that an SSB may be associated with an RO set, and that the RO set associated with the SSB may be determined in advance, and that a time unit may include a plurality of times, and that any RO set associated with the SSB includes a plurality of ROs at the plurality of times, a plurality of RO sets corresponding to the number X of PRACH repetitions are determined among RO sets corresponding to a same SSB, and the rule for determining the RO sets used for PRACH transmission may be one or more of the following:

(1) At different times in a same time unit, X ROs corresponding to a same SSB and located at a same frequency domain position are determined as an RO set used for PRACH transmission.
(2) At different times in a same time unit, X ROs corresponding to a same SSB and located at different frequency domain positions are determined as an RO set used for PRACH transmission.
(3) At different times in a same time unit, X ROs corresponding to a same SSB and having a same index (index) are determined as an RO set used for PRACH transmission.
(4) At different times in a same time unit, X ROs corresponding to a same SSB and having different indexes (index) are determined as an RO set used for PRACH transmission.

The indexes may be frequency domain resource indexes that are sequentially numbered from a low frequency to a high frequency or from a high frequency to a low frequency in frequency domain only for different frequency-division-multiplexed RO sets mapped to a same SSB in a same time unit; or the indexes may be frequency domain resource indexes that are sequentially numbered from a low frequency to a high frequency or from a high frequency to a low frequency in frequency domain for all RO sets in a same time unit. For example, for a same time unit, for each SSB, RO sets associated with the SSB may be indexed from a low frequency to a high frequency and numbered RO#0 and RO#1 (for example, the SSB is associated with two RO sets in a time unit), or all RO sets in a time unit may be numbered RO#0, RO#1, RO#2, and RO#3 from a low frequency to a high frequency.

(5) A plurality of RO sets are determined based on the first indication information from the network side, and then a plurality of ROs or RO sets used for PRACH transmission are determined from the RO sets based on the frequency-hopping rule.

(6) A plurality of RO sets are determined based on a rule configured by the second indication information from the network side or a predefined rule, and then a plurality of ROs or RO sets used for PRACH transmission are determined from the RO sets based on the frequency-hopping rule. For example, the second indication information may indicate that a plurality of RO sets are determined based on the foregoing rule (1) or (2) or (3) or (4) or (5). For example, it may be predefined that a plurality of RO sets are determined based on the foregoing rule (1) or (2) or (3) or (4) or (5).

(7) The terminal determines Q RO sets from RO sets corresponding to the first SSB in a first time unit. For example, in a time unit in which a quantity of frequency-division-multiplexed RO sets is larger (N1), RO sets as many as those in a time unit in which a quantity of RO sets is smaller (Q = N2) are selected. An RO set selection method may be based on one or more of the following:

(7.1) selecting N2 RO sets based on a network configuration, for example, selecting by indicating indexes (index) corresponding to a same SSB, or selecting based on a pattern (pattern) configured by the network; and

(7.2) selecting based on a predefined rule, for example, in an order of indexes (index) corresponding to a same SSB, selecting first N2 RO sets or selecting last N2 RO sets.

Then, from RO sets selected at a time domain position at which there are a larger quantity of RO sets, and RO sets in a time unit in which there are a smaller quantity of RO sets, a plurality of RO sets are determined based on the foregoing rule (1) or (2) or (3) or (4) or (5) or (6), and then an RO set used for PRACH transmission is determined from the RO sets based on the frequency-hopping rule.

(8) It may be specified that only RO sets having a same quantity of frequency-division-multiplexed RO sets associated with a same SSB in different time units can be selected as a plurality of RO sets, and then an RO set used for PRACH transmission is determined from the RO sets based on the frequency-hopping rule. In other words, RO sets having different quantities of frequency-division-multiplexed RO sets associated with a same SSB are classified into different categories. Determining of an RO group used for sending the PRACH can be performed only between RO sets in a same category.

(9) PRACH transmission with repetitions may not be supported, that is, determining of an RO set is not required.

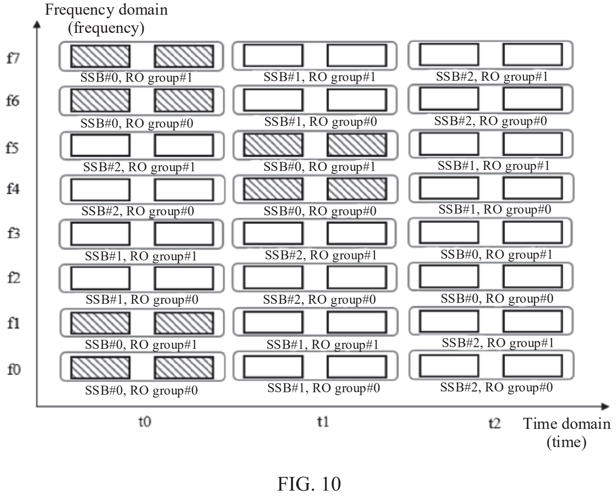

FIG. 10 is a fifth schematic diagram of an SSB-RO association according to an embodiment of this application. Using FIG. 10 as an example, quantities of RO sets associated with a same SSB in different time units are different; and configured RO resources are first determined as an RO set, and then the SSB and the RO set are associated. A quantity of SSBs is 3 ( $N_{TX}^{SSB} = 3$ ), a quantity of frequency-division-multiplexed RO sets is 8 (M = 8), and each SSB is associated with two consecutive RO sets (N = 2). Quantities of RO sets associated with a same SSB in different time units are different. For example, a quantity of RO sets associated with SSB#0 in a time unit t0 is 4, and a quantity of RO sets associated in a time unit t1 is 2. In FIG. 10, RO sets are numbered for each SSB in each time unit.

Optionally, for the case in FIG. 10, frequency hopping may not be supported, and the PRACH can only be sent based on the RO set in FIG. 10.

Optionally, RO sets having a same quantity of frequency-division-multiplexed RO sets associated with a same SSB in different time units may be classified into one category of RO sets, and for different categories of RO sets, frequency hopping of PRACH repetitions is performed independently. For example, for different categories of RO groups, frequency-hopping offsets may be configured independently. In other words, based on a frequency-hopping rule that is configured by the network or predefined, an RO set used for PRACH transmission can be selected only among corresponding RO sets in time units in which quantities of RO sets are the same (for example, one or more RO sets associated with a same SSB are selected in a time unit first, and then X ROs are selected, based on the frequency-hopping rule from the one or more RO sets, for PRACH transmission with repetitions in frequency-hopping mode). In time units in which quantities of RO sets are different, different frequency-hopping rules may be used separately, or a same frequency-hopping rule may be used.

For example, in FIG. 10, SSB#0 corresponds to four RO sets in a time unit t0, and corresponds to two RO sets in a time unit t1. In this case, different frequency-hopping rules may be used respectively for the time unit t0 and the time unit t1.

Optionally, ROs used for PRACH transmission with repetitions in frequency-hopping mode are ROs associated with a same SSB at different times, frequency domain positions may be the same or may be different, and corresponding indexes may be the same or may be different.

Optionally, ROs used for PRACH transmission with repetitions in frequency-hopping mode are ROs associated with a same SSB at different times in a same time unit, frequency domain positions may be the same or may be different, and corresponding indexes may be the same or may be different.

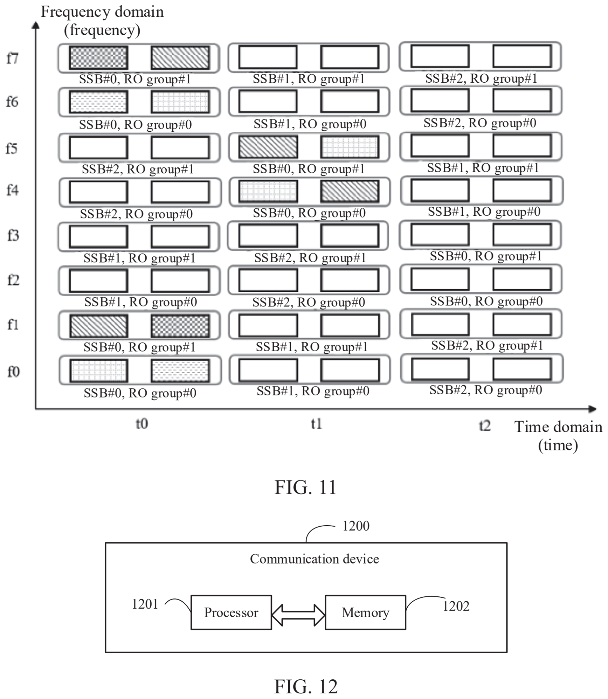

FIG. 11 is a sixth schematic diagram of an SSB-RO association according to an embodiment of this application. As shown in FIG. 11, a time unit corresponds to two times, that is, an RO set associated with each SSB includes ROs at two different times, for example, SSB#0 corresponding to (t0, f0). RO group#0 includes ROs at two different times. ROs in respective same shaded shapes of time units t0 and t1 form an RO set used for PRACH transmission. For example, a first RO in (t0, f0) and a second RO in (t0, f6) may be selected in FIG. 11, or a second RO in (t0, f0) and a first RO in (t0, f6) may be selected in FIG. 11, or a first RO in (t1, f4) and a second RO in (t1, f5) may be selected in FIG. 11, where a frequency-hopping offset of the time unit t0 is 2, and a frequency-hopping offset of the time unit t1 is 1.

Optionally, in a time unit in which there are a larger quantity of RO sets, RO sets as many as those in a time unit in which a quantity of RO sets is smaller are selected. For SSB#0 in FIG. 10, two RO sets are selected in the time unit t0. For example, first two or last two RO sets may be selected based on RO set indexes configured by the network or a configured pattern or a predefined rule. Then, from the RO sets selected in the time unit in which there are a larger quantity of RO sets and those in the time unit in which there are a smaller quantity of RO sets, an RO set used for PRACH transmission is determined based on a same frequency-hopping rule that is configured by the network or predefined. The UE uses the RO set used for PRACH transmission to send the PRACH.

Optionally, the index is used to identify at least one of all frequency-division-multiplexed ROs or RO sets in any time unit; or the index is used to identify at least one of ROs or RO sets corresponding to any SSB in a same time unit.

Optionally, the indexes may be frequency domain resource indexes that are sequentially numbered from a low frequency to a high frequency or from a high frequency to a low frequency in frequency domain only for different frequency-division-multiplexed ROs mapped to a same SSB at a same time; or the indexes may be frequency domain resource indexes that are sequentially numbered from a low frequency to a high frequency or from a high frequency to a low frequency in frequency domain for all ROs at a same time. For example, for a same time, for each SSB, ROs associated with the SSB may be indexed from a low frequency to a high frequency and numbered RO#0 and RO#1 (for example, the SSB is associated with two ROs in a time unit), or all ROs at a time may be numbered RO#0, RO#1, RO#2, and RO#3 from a low frequency to a high frequency.

Optionally, the indexes may be frequency domain resource indexes that are sequentially numbered from a low frequency to a high frequency or from a high frequency to a low frequency in frequency domain only for different frequency-division-multiplexed RO sets mapped to a same SSB in a same time unit; or the indexes may be frequency domain resource indexes that are sequentially numbered from a low frequency to a high frequency or from a high frequency to a low frequency in frequency domain for all RO sets in a same time unit. For example, for a same time unit, for each SSB, RO sets associated with the SSB may be indexed from a low frequency to a high frequency and numbered RO group#0 and RO group#1 (for example, the SSB is associated with two RO sets in a time unit), or all RO sets in a time unit may be numbered RO group#0, RO group#1, RO group#2, and RO group#3 from a low frequency to a high frequency.

Optionally, the ROs or RO sets used for PRACH transmission are specifically used for PRACH transmission with repetitions.

Optionally, the ROs or RO sets used for PRACH transmission are specifically used for PRACH transmission with repetitions in frequency-hopping mode.

Optionally, the ROs and/or RO sets used for PRACH transmission are specifically used for PRACH transmission with repetitions.

Optionally, the ROs and/or RO sets used for PRACH transmission are specifically used for PRACH transmission with repetitions in frequency-hopping mode.

For RO resources configured by the network and an SSB, it is also possible that ROs are first determined as a set, and then the RO set is associated with the SSB. For an SSB-RO group mapping mode, in a case that frequency hopping is enabled, how to determine RO sets used for sending the PRACH in frequency-hopping mode also needs to be clarified.

Optionally, in a case that an SSB is associated with an RO set, after RO sets in two different time units are selected for sending the PRACH, ROs associated with a same SSB at different times in a same time unit may be selected, from the determined RO sets in two different time units based on the frequency-hopping rule, for PRACH transmission with repetitions in frequency-hopping mode. For example, after RO sets in two different time units are selected from a first category of RO sets, ROs associated with a same SSB at different times may be selected, from an RO set in a time unit based on the frequency-hopping rule, for PRACH transmission with repetitions in frequency-hopping mode.

For example, if quantities of RO sets associated with a same SSB in different time units are the same, an RO set used for sending the PRACH in frequency-hopping mode may be determined among different RO sets in a same time unit based on a frequency-hopping rule that is configured by the network or predefined. The UE uses the RO set used for sending the PRACH in frequency-hopping mode to perform PRACH transmission with repetitions in frequency-hopping mode.

For example, if quantities of RO sets associated with a same SSB in at least some different time units are different, an RO set used for sending the PRACH in frequency-hopping mode may be determined based on one or more of the following (this is merely used as an example, and similar rules are applicable to this embodiment of this application):

(1) Frequency hopping is not supported, that is, the PRACH can only be sent based on an associated default RO set.

(2) Based on a frequency-hopping rule that is configured by the network or predefined, an RO set used for sending the PRACH in frequency-hopping mode is selected among RO sets corresponding to time units in which quantities of RO sets are the same. For example, ROs associated with a same SSB at different times in a same time unit are determined for sending the PRACH in frequency-hopping mode. Frequency domain positions of finally selected ROs may be the same or may be different, and corresponding indexes may be the same or may be different. In time units in which quantities of RO sets are different, different frequency-hopping rules may be used separately, or a same frequency-hopping rule may be used.

(3) In a time unit in which a quantity of RO sets is larger (N1), RO sets as many as those in a time unit in which a quantity of RO sets is smaller (N2) are selected. An RO set selection method may be based on one or more of the following:

selecting N2 RO sets based on a network configuration, for example, selecting based on RO set indexes (index) corresponding to a same SSB, or selecting based on a pattern (pattern) configured by the network;
selecting based on a predefined rule, for example, in an order of RO set indexes (index) corresponding to a same SSB, selecting first or last N2 RO sets; and
then, from the N2 RO sets selected in the time unit in which there are a larger quantity of RO sets and those in the time unit in which there are a smaller quantity of RO sets, determining, based on a same frequency-hopping rule that is configured by the network or predefined, an RO set used for sending the PRACH in frequency-hopping mode, for example, determining ROs associated with a same SSB at different times in a same time unit, for sending the PRACH in frequency-hopping mode, where frequency domain positions of finally selected ROs may be the same or may be different, and corresponding indexes may be the same or may be different.

(4) RO sets having a same quantity of frequency-division-multiplexed RO sets associated with a same SSB in different time units are classified into one category of RO sets, and for different categories of RO sets, frequency hopping of PRACH repetitions is performed independently. For example, for different categories of RO groups, frequency-hopping offsets may be configured independently. For any category of RO sets, ROs associated with a same SSB at different times in a same time unit may be determined for sending the PRACH in frequency-hopping mode. Frequency domain positions of finally selected ROs may be the same or may be different, and corresponding indexes may be the same or may be different.

Optionally, the PRACH is used in a random access procedure for a system information request.

Optionally, the determining, based on a PRACH resource configuration, ROs or RO sets used for PRACH transmission includes:

in a case that PRACH transmission with repetitions is applicable to the random access procedure and that a PRACH resource configuration matching the PRACH transmission with repetitions and dedicated to the random access procedure for the system information request is configured, determining that the ROs or RO sets used for PRACH transmission include PRACH resources matching the PRACH transmission with repetitions and dedicated to the random access procedure for the system information request;
in a case that PRACH transmission with repetitions is applicable to the random access procedure and that no PRACH resource configuration matching the PRACH transmission with repetitions and dedicated to the system information request is configured, determining that the ROs or RO sets used for PRACH transmission include resources for the PRACH transmission with repetitions;
in a case that PRACH transmission with repetitions is applicable to the random access procedure, and that no PRACH resource configuration matching the PRACH transmission with repetitions and dedicated to the random access procedure for the system information request is configured, but that a PRACH resource configuration dedicated to the random access procedure for the system information request with a greater number of repetitions than that in the PRACH transmission with repetitions is configured, determining that the ROs or RO sets used for PRACH transmission include PRACH resources dedicated to the random access procedure for the system information request with the greater number of repetitions than that in the PRACH transmission with repetitions; or
in a case that PRACH transmission with repetitions is inapplicable to the random access procedure and that a PRACH resource configuration determined based on SI-RequestConfig and dedicated to the random access procedure for the system information request is configured, determining that the ROs or RO sets used for PRACH transmission include PRACH resources determined based on SI-RequestConfig and dedicated to the random access procedure for the system information request.

Optionally, the terminal determines, based on a PRACH resource configuration, ROs and/or RO sets used for PRACH transmission, where the PRACH is used in a random access procedure for a system information request.

Optionally, the determining, based on a PRACH resource configuration, ROs and/or RO sets used for PRACH transmission includes:

in a case that PRACH transmission with repetitions is applicable to the random access procedure and that a PRACH resource configuration matching the PRACH transmission with repetitions and dedicated to the random access procedure for the system information request is configured, determining that the ROs and/or RO sets used for PRACH transmission include PRACH resources matching the PRACH transmission with repetitions and dedicated to the random access procedure for the system information request;

in a case that PRACH transmission with repetitions is applicable to the random access procedure and that no PRACH resource configuration matching the PRACH transmission with repetitions and dedicated to the system information request is configured, determining that the ROs and/or RO sets used for PRACH transmission include resources for the PRACH transmission with repetitions;

in a case that PRACH transmission with repetitions is applicable to the random access procedure, and that no PRACH resource configuration matching the PRACH transmission with repetitions and dedicated to the random access procedure for the system information request is configured, but that a PRACH resource configuration dedicated to the random access procedure for the system information request with a greater number of repetitions than that in the PRACH transmission with repetitions is configured, determining that the ROs and/or RO sets used for PRACH transmission include PRACH resources dedicated to the random access procedure for the system information request with the greater number of repetitions than that in the PRACH transmission with repetitions; or

in a case that PRACH transmission with repetitions is inapplicable to the random access procedure and that a PRACH resource configuration determined based on SI-RequestConfig and dedicated to the random access procedure for the system information request is configured, determining that the ROs and/or RO sets used for PRACH transmission include PRACH resources determined based on SI-RequestConfig and dedicated to the random access procedure for the system information request.

Optionally, the determining ROs used for PRACH transmission in the random access procedure for the system information request may include:

1. obtaining, from system information SI, the PRACH resource configuration dedicated to the random access procedure for the system information request, where the PRACH resource configuration includes a time-frequency preamble resource, and a number of PRACH repetitions, and optionally, further includes parameters related to PRACH transmission (expected received power of a preamble, and a threshold for selecting an SSB); and

2. determining, by the UE when the UE triggers a random access procedure for requesting system information, ROs used for PRACH transmission in the random access procedure for the system information request, including at least one of the following:

if PRACH transmission with repetitions (for example, PRACH transmission with a number of repetitions being 2) is applicable to the current random access procedure and a PRACH resource configuration matching the current PRACH transmission with repetitions and dedicated to the random access procedure for the system information request (for example, resources for the PRACH transmission with repetitions, dedicated to the random access procedure for the system information request, with a number of repetitions being 2) is configured, selecting PRACH resources matching the current PRACH transmission with repetitions and dedicated to the random access procedure for the system information request, for PRACH transmission;

if PRACH transmission with repetitions (for example, PRACH transmission with a number of repetitions being 2) is applicable to the current random access procedure but no PRACH resource configuration matching the current PRACH transmission with repetitions and dedicated to the random access procedure for the system information request is configured, selecting resources for the PRACH transmission with repetitions, for PRACH transmission, and then carrying system information request information in Msg3 transmission;

if PRACH transmission with repetitions (for example, PRACH transmission with a number of repetitions being 2) is applicable to the current random access procedure, and no PRACH resource configuration matching the current PRACH transmission with repetitions and dedicated to the random access procedure for the system information request is configured, but there is a PRACH resource configuration dedicated to the random access procedure for the system information request with a greater number of repetitions than that in the currently applicable PRACH transmission with repetitions (for example, resources for the PRACH transmission with repetitions, dedicated to the random access procedure for the system information request, with a number of repetitions being 4, and resources for the PRACH transmission with repetitions, dedicated to the random access procedure for the system information request, with a number of repetitions being 8), selecting the PRACH resource configuration dedicated to the random access procedure for the system information request with the number of repetitions only greater than that in the currently applicable PRACH transmission with repetitions (for example, the resources for the PRACH transmission with repetitions, dedicated to the random access procedure for the system information request, with the number of repetitions being 4); or

when PRACH transmission with repetitions is inapplicable to the current random access procedure, if a conventional PRACH resource configuration dedicated to the random access procedure for the system information request is configured, applying the conventional PRACH resource configuration dedicated to the random access procedure for the system information request, where the conventional PRACH resource configuration dedicated to the random access procedure for the system information request is configured by SI-RequestConfig.

In an embodiment, ROs are determined by the UE when the UE triggers a random access procedure for requesting system information; and

after the UE triggers the random access procedure for requesting system information, in a case that the UE considers that PRACH transmission with a number of repetitions being 2 is applicable to the current random access procedure, if the NW side configures only the conventional PRACH resource configuration dedicated to the random access procedure for the system information request (that is, no PRACH resource configuration matching the current PRACH transmission with repetitions and dedicated to the random access procedure for the system information request is configured), the UE selects the resources for the PRACH transmission with repetitions with the number of repetitions being 2, and carries system information request information when sending a Msg3.

The conventional PRACH resource configuration dedicated to the random access procedure for the system information request is configured by SI-RequestConfig.

Optionally, the method further includes:

obtaining, from system information SI, the PRACH resource configuration dedicated to the random access procedure for the system information request, where
the PRACH resource configuration includes one or more of the following:

a time-frequency domain resource configuration;
a preamble (preamble) resource configuration;
the number of repetitions; and
parameters related to PRACH transmission.

Optionally, the method further includes:

obtaining, from system information SI, the PRACH resource configuration dedicated to the random access procedure for the system information request, where
the PRACH resource configuration includes one or more of the following:

a time-frequency domain resource configuration;
a preamble (preamble) resource configuration;
the number of repetitions; and
parameters related to PRACH transmission.

Optionally, a hierarchical structure of PRACH resource configuration signaling dedicated to the random access procedure for the system information request may be as follows:

```
SI-SchedulingInfo-v1800 ::=        SEQUENCE {

    si-RequestConfigPRACHrep-r18        SI-RequestConfig

    PRACHrepNum-r18            ENUMERATED {2, 4, 8}

    rsrp-ThresholdSSB-r18        RSRP-Range

    rsrp-ThresholdSSBPRACH-r18        RSRP-Range

}.
```

Optionally, after the determining that the ROs or RO sets used for PRACH transmission include resources for the PRACH transmission with repetitions, the method further includes:
sending system information request information.

Optionally, after the determining that the ROs and/or RO sets used for PRACH transmission include resources for the PRACH transmission with repetitions, the method further includes:
sending system information request information.

Optionally, the determining ROs or RO sets used for PRACH transmission includes: determining, within a time window with a length of Z, RO sets used for PRACH transmission with repetitions, where Z is determined based on a system information request period SI request period or determined based on a network configuration or a predefined rule.

Optionally, the determining ROs and/or RO sets used for PRACH transmission includes: determining, within a time window with a length of Z, RO sets used for PRACH transmission with repetitions, where Z is determined based on a system information request period SI request period or determined based on a network configuration or a predefined rule.

Optionally, in the embodiments of this application, an RO group may be determined within a time window with a length of Z, and Z may be determined based on a system information request period SI request period or determined based on a network configuration or a predefined rule.

In some embodiments, ROs and/or RO sets are determined within a time window with a length of Z, and Z is determined based on a system information request period SI request period or determined based on a network configuration or a predefined rule. For example, the network may configure the UE to determine ROs or RO sets only within Z SSB-RO mapping cycles (SSB to RO mapping cycle) or Z SSB-RO association periods (SSB to RO association period) or Z SSB-RO association pattern periods (SSB to RO association pattern period) or Z system frames.

The RO determining method provided in the embodiments of this application may be performed by an RO determining apparatus. An RO determining apparatus provided in the embodiments of this application is described by assuming that the RO determining method in the embodiments of this application is performed by the RO determining apparatus.

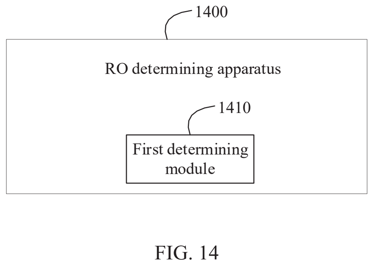

FIG. 14 is a schematic diagram of a structure of an RO determining apparatus according to an embodiment of this application. As shown in FIG. 14, the RO determining apparatus includes a first determining module 1410.

The first determining module 1410 is configured to determine, based on ROs or RO sets respectively associated with at least one SSB or based on a PRACH resource configuration, ROs or RO sets used for PRACH transmission.

Optionally, quantities of ROs or RO sets associated with a same SSB in different time units are the same, or frequency domain resource positions of at least some ROs or RO sets associated with a same SSB in different time units are the same.

Optionally, quantities of ROs or RO sets associated with a same SSB in different time units are not completely the same, and/or frequency domain resource positions of at least some ROs or RO sets associated with a same SSB in different time units are different.

Optionally, the first determining module 1410 is configured to:

determine, based on ROs or RO sets respectively corresponding to a first SSB in P time units corresponding to a same quantity of ROs or RO sets, the ROs or RO sets used for PRACH transmission; or
determine, based on ROs or RO sets respectively corresponding to a first SSB in P time units corresponding to different quantities of ROs or RO sets, the ROs or RO sets used for PRACH transmission, where
P is an integer greater than or equal to 1.

Optionally, the first determining module 1410 is configured to:

in a case that quantities of ROs or RO sets respectively corresponding to the first SSB in at least two time units are different, classify ROs or RO sets respectively corresponding to the at least two time units into at least two categories of ROs or RO sets, where in any category of ROs or RO sets, quantities of ROs or RO sets respectively corresponding to the first SSB in different time units are the same; and

determine, based on ROs or RO sets that are in any category of ROs or RO sets and respectively corresponding to the first SSB in the P time units, the ROs or RO sets used for PRACH transmission.

Optionally, the first determining module 1410 is configured to:

determine, based on different rules, the ROs or RO sets used for PRACH transmission respectively from the at least two categories of ROs or RO sets.

Optionally, the first determining module 1410 is configured to:

determine Q ROs or RO sets from ROs or RO sets corresponding to the first SSB in a first time unit, where Q is an integer greater than or equal to 1, Q is determined based on a smaller one of quantities of ROs or RO sets respectively corresponding to the first SSB in the P time units, and the first time unit is a time unit that is in the P time units and in which a quantity of ROs or RO sets corresponding to the first SSB is larger than quantities of ROs or RO sets corresponding to the first SSB in other time units in the P time units; and

determine, based on the Q ROs or RO sets, and the ROs or RO sets corresponding to the first SSB in the other time units, the ROs or RO sets used for PRACH transmission.

Optionally, the first determining module 1410 is configured to:

determine that first Q or last Q ROs or RO sets or Q ROs or RO sets at preset positions among the ROs or RO sets corresponding to the first SSB in the first time unit are the Q ROs or RO sets.

Optionally, the first determining module is configured to perform any one of the following:

determining that the ROs or RO sets used for PRACH transmission include ROs or RO sets located at different times and at a same frequency domain position among ROs or RO sets corresponding to a first SSB;

determining that the ROs or RO sets used for PRACH transmission include ROs or RO sets located at different times and at different frequency domain positions among ROs or RO sets corresponding to a first SSB;

determining that the ROs or RO sets used for PRACH transmission include ROs or RO sets located at different times and indicated by a same index among ROs or RO sets corresponding to a first SSB;

determining that the ROs or RO sets used for PRACH transmission include ROs or RO sets located at different times and indicated by different indexes among ROs or RO sets corresponding to a first SSB;

determining, based on first indication information from a network side, the ROs or RO sets used for PRACH transmission from the ROs or RO sets respectively associated with the at least one SSB, where the first indication information is used to indicate positions of the ROs or RO sets used for PRACH transmission; and

determining, based on second indication information from a network side, the ROs or RO sets used for PRACH transmission from the ROs or RO sets respectively associated with the at least one SSB, where the second indication information is used to indicate a rule for determining the ROs or RO sets used for PRACH transmission, where the first SSB is any one of the at least one SSB, and a time unit includes one or more times.

Optionally, the index is used to identify at least one of all frequency-division-multiplexed ROs or RO sets in any time unit; or the index is used to identify at least one of ROs or RO sets corresponding to any SSB in a same time unit.

Optionally, the ROs or RO sets used for PRACH transmission are specifically used for PRACH transmission with repetitions.

Optionally, the ROs or RO sets used for PRACH transmission are specifically used for PRACH transmission with repetitions in frequency-hopping mode.

Optionally, any one of the at least one SSB corresponds to an RO set including ROs at R adjacent times and at a same frequency domain position, where R is an integer greater than or equal to 1.

Optionally, the PRACH is used in a random access procedure for a system information request.

Optionally, the first determining module 1410 is configured to:

in a case that PRACH transmission with repetitions is applicable to the random access procedure and that a PRACH resource configuration matching the PRACH transmission with repetitions and dedicated to the random access procedure for the system information request is configured, determine that the ROs or RO sets used for PRACH transmission include PRACH resources matching the PRACH transmission with repetitions and dedicated to the random access procedure for the system information request;

in a case that PRACH transmission with repetitions is applicable to the random access procedure and that no PRACH resource configuration matching the PRACH transmission with repetitions and dedicated to the system information request is configured, determine that the ROs or RO sets used for PRACH transmission include resources for the PRACH transmission with repetitions;

in a case that PRACH transmission with repetitions is applicable to the random access procedure, and that no PRACH resource configuration matching the PRACH transmission with repetitions and dedicated to the random access procedure for the system information request is configured, but that a PRACH resource configuration dedicated to the random access procedure for the system information request with a greater number of repetitions than that in the PRACH transmission with repetitions is configured, determine that the ROs or RO sets used for PRACH transmission include PRACH resources dedicated to the random access procedure for the system information request with the greater number of repetitions than that in the PRACH transmission with repetitions; or

in a case that PRACH transmission with repetitions is inapplicable to the random access procedure and that a PRACH resource configuration determined based on SI-RequestConfig and dedicated to the random access procedure for the system information request is configured, determine that the ROs or RO sets used for PRACH transmission include PRACH resources determined based on SI-RequestConfig and dedicated to the random access procedure for the system information request.

Optionally, the apparatus further includes:

an obtaining module, configured to obtain, from system information SI, the PRACH resource configuration dedicated to the random access procedure for the system information request, where the PRACH resource configuration includes one or more of the following:

a time-frequency domain resource configuration;
a preamble (preamble) resource configuration;
the number of repetitions; and
parameters related to PRACH transmission.

Optionally, the apparatus further includes:
a sending module, configured to send system information request information after it is determined that the ROs or RO sets used for PRACH transmission include the resources for the PRACH transmission with repetitions.

Optionally, the first determining module 1410 is configured to:
determine, within a time window with a length of Z, RO sets used for PRACH transmission with repetitions, where Z is determined based on a system information request period SI request period or determined based on a network configuration or a predefined rule.

The RO determining apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The RO determining apparatus provided in this embodiment of this application can implement each process implemented in the method embodiments in FIG. 5 to FIG. 11, with the same technical effect achieved. To avoid repetition, details are not described herein again.

FIG. 12 is a schematic diagram of a structure of a communication device according to an embodiment of this application. As shown in FIG. 12, an embodiment of this application further provides a communication device 1200, including a processor 1201 and a memory 1202. A program or instructions capable of running on the processor 1201 are stored in the memory 1202. For example, when the communication device 1200 is a terminal, and the program or instructions are executed by the processor 1201, the steps of the foregoing embodiment of the RO determining method are implemented, with the same technical effect achieved.

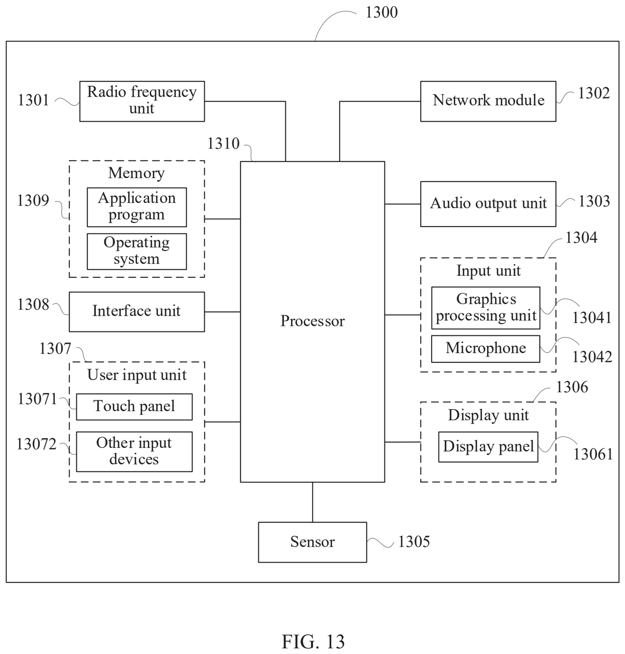

An embodiment of this application further provides a terminal, including a processor and a communication interface. The communication interface is coupled to the processor. The processor is configured to run a program or instructions to implement the steps in the method embodiments shown in FIG. 5 to FIG. 11. The terminal embodiment corresponds to the foregoing terminal-side method embodiment, and each implementation process and implementation of the foregoing method embodiment can be applied to the terminal embodiment, with the same technical effect achieved. Specifically, FIG. 13 is a schematic diagram of a hardware structure of a terminal for implementing an embodiment of this application.

The terminal 1300 includes but is not limited to at least some components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

A person skilled in the art may understand that the terminal 1300 may further include a power supply (for example, a battery) supplying power to all components. The power supply may be logically connected to the processor 1310 through a power management system. In this way, functions such as charge management, discharge management, and power consumption management are implemented by using the power management system. The terminal structure shown in FIG. 13 does not constitute a limitation on the terminal. The terminal may include more or fewer components than those shown in the figure, or some components are combined, or component arrangements are different. Details are not described herein again.

It should be understood that, in this embodiment of this application, the input unit 1304 may include a graphics processing unit (Graphics Processing Unit, GPU) 13041 and a microphone 13042. The GPU 13041 processes image data of a still picture or video obtained by an image capture apparatus (such as a camera) in a video capture mode or an image capture mode. The display unit 1306 may include a display panel 13061, and the display panel 13061 may be configured in a form of a liquid crystal display, an organic light-emitting diode, or the like. The user input unit 1307 includes at least one of a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1301 may transmit the downlink data to the processor 1310 for processing. In addition, the radio frequency unit 1301 may send uplink data to the network-side device. Usually, the radio frequency unit 1301 includes but is not limited to an antenna, an amplifier, a transceiver, a coupler, a low noise amplifier, a duplexer, and the like.

The memory 1309 may be configured to store software programs or instructions and various data. The memory 1309 may primarily include a first storage area for storing programs or instructions and a second storage area for storing data. The first storage area may store an operating system, an application program or instructions required by at least one function (such as an audio play function and an image play function), and the like. In addition, the memory 1309 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1309 in this embodiment of this application includes but is not limited to these and any other suitable types of memories.

The processor 1310 may include one or more processing units. Optionally, the processor 1310 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1310.

The processor 1310 is configured to:

determine, based on ROs or RO sets respectively associated with at least one synchronization signal block SSB or based on a physical random access channel PRACH resource configuration, ROs or RO sets used for PRACH transmission.

Optionally, quantities of ROs or RO sets associated with a same SSB in different time units are the same, or frequency domain resource positions of at least some ROs or RO sets associated with a same SSB in different time units are the same.

Optionally, quantities of ROs or RO sets associated with a same SSB in different time units are not completely the same, or frequency domain resource positions of at least some ROs or RO sets associated with a same SSB in different time units are different.

Optionally, the processor 1310 is configured to:

determine, based on ROs or RO sets respectively corresponding to a first SSB in P time units corresponding to a same quantity of ROs or RO sets, the ROs or RO sets used for PRACH transmission; or
determine, based on ROs or RO sets respectively corresponding to a first SSB in P time units corresponding to different quantities of ROs or RO sets, the ROs or RO sets used for PRACH transmission, where
P is an integer greater than or equal to 1.

Optionally, the processor 1310 is configured to:

in a case that quantities of ROs or RO sets respectively corresponding to the first SSB in at least two time units are different, classify ROs or RO sets respectively corresponding to the at least two time units into at least two categories of ROs or RO sets, where in any category of ROs or RO sets, quantities of ROs or RO sets respectively corresponding to the first SSB in different time units are the same; and

determine, based on ROs or RO sets that are in any category of ROs or RO sets and respectively corresponding to the first SSB in the P time units, the ROs or RO sets used for PRACH transmission.

Optionally, the processor 1310 is configured to:

determine, based on different rules, the ROs or RO sets used for PRACH transmission respectively from the at least two categories of ROs or RO sets.

Optionally, the processor 1310 is configured to:

determine Q ROs or RO sets from ROs or RO sets corresponding to the first SSB in a first time unit, where Q is an integer greater than or equal to 1, Q is determined based on a smaller one of quantities of ROs or RO sets respectively corresponding to the first SSB in the P time units, and the first time unit is a time unit that is in the P time units and in which a quantity of ROs or RO sets corresponding to the first SSB is larger than quantities of ROs or RO sets corresponding to the first SSB in other time units in the P time units; and

determine, based on the Q ROs or RO sets, and the ROs or RO sets corresponding to the first SSB in the other time units, the ROs or RO sets used for PRACH transmission.

Optionally, the processor 1310 is configured to:

determine that first Q or last Q ROs or RO sets or Q ROs or RO sets at preset positions among the ROs or RO sets corresponding to the first SSB in the first time unit are the Q ROs or RO sets.

Optionally, the processor 1310 is configured to perform any one of the following:

determining that the ROs or RO sets used for PRACH transmission include ROs or RO sets located at different times and at a same frequency domain position among ROs or RO sets corresponding to a first SSB;

determining that the ROs or RO sets used for PRACH transmission include ROs or RO sets located at different times and at different frequency domain positions among ROs or RO sets corresponding to a first SSB;

determining that the ROs or RO sets used for PRACH transmission include ROs or RO sets located at different times and indicated by a same index among ROs or RO sets corresponding to a first SSB;

determining that the ROs or RO sets used for PRACH transmission include ROs or RO sets located at different times and indicated by different indexes among ROs or RO sets corresponding to a first SSB;

determining, based on first indication information from a network side, the ROs or RO sets used for PRACH transmission from the ROs or RO sets respectively associated with the at least one SSB, where the first indication information is used to indicate positions of the ROs or RO sets used for PRACH transmission; and

determining, based on second indication information from a network side, the ROs or RO sets used for PRACH transmission from the ROs or RO sets respectively associated with the at least one SSB, where the second indication information is used to indicate a rule for determining the ROs or RO sets used for PRACH transmission, where the first SSB is any one of the at least one SSB, and a time unit includes one or more times.

Optionally, the index is used to identify at least one of all frequency-division-multiplexed ROs or RO sets in any time unit; or the index is used to identify at least one of ROs or RO sets corresponding to any SSB in a same time unit.

Optionally, the ROs or RO sets used for PRACH transmission are specifically used for PRACH transmission with repetitions.

Optionally, the ROs or RO sets used for PRACH transmission are specifically used for PRACH transmission with repetitions in frequency-hopping mode.

Optionally, any one of the at least one SSB corresponds to an RO set including ROs at R adjacent times and at a same frequency domain position, where R is an integer greater than or equal to 1.

Optionally, the PRACH is used in a random access procedure for a system information request.

Optionally, the processor 1310 is configured to:

in a case that PRACH transmission with repetitions is applicable to the random access procedure and that a PRACH resource configuration matching the PRACH transmission with repetitions and dedicated to the random access procedure for the system information request is configured, determine that the ROs or RO sets used for PRACH transmission include PRACH resources matching the PRACH transmission with repetitions and dedicated to the random access procedure for the system information request;

in a case that PRACH transmission with repetitions is applicable to the random access procedure and that no PRACH resource configuration matching the PRACH transmission with repetitions and dedicated to the system information request is configured, determine that the ROs or RO sets used for PRACH transmission include resources for the PRACH transmission with repetitions;

in a case that PRACH transmission with repetitions is applicable to the random access procedure, and that no PRACH resource configuration matching the PRACH transmission with repetitions and dedicated to the random access procedure for the system information request is configured, but that a PRACH resource configuration dedicated to the random access procedure for the system information request with a greater number of repetitions than that in the PRACH transmission with repetitions is configured, determine that the ROs or RO sets used for PRACH transmission include PRACH resources dedicated to the random access procedure for the system information request with the greater number of repetitions than that in the PRACH transmission with repetitions; or

in a case that PRACH transmission with repetitions is inapplicable to the random access procedure and that a PRACH resource configuration determined based on SI-RequestConfig and dedicated to the random access procedure for the system information request is configured, determine that the ROs or RO sets used for PRACH transmission include PRACH resources determined based on SI-RequestConfig and dedicated to the random access procedure for the system information request.

Optionally, the processor 1310 is configured to:

obtain, from system information SI, the PRACH resource configuration dedicated to the random access procedure for the system information request, where
the PRACH resource configuration includes one or more of the following:

a time-frequency domain resource configuration;
a preamble (preamble) resource configuration;
the number of repetitions; and
parameters related to PRACH transmission.

Optionally, the radio frequency unit 1301 is configured to:
send system information request information after it is determined that the ROs or RO sets used for PRACH transmission include the resources for the PRACH transmission with repetitions.

Optionally, the processor 1310 is configured to:
determine, within a time window with a length of Z, RO sets used for PRACH transmission with repetitions, where Z is determined based on a system information request period SI request period or determined based on a network configuration or a predefined rule.

It may be understood that for the implementation process of each implementation in the embodiment, reference may be made to the related descriptions in the method embodiments in FIG. 5 to FIG. 11, with the same or corresponding technical effect achieved. To avoid repetition, details are not described herein again.

An embodiment of this application further provides a readable storage medium. The readable storage medium stores a program or instructions. When the program or instructions are executed by a processor, each process of the foregoing embodiment of the RO determining method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

In addition, an embodiment of this application provides a chip. The chip includes a processor and a communication interface. The communication interface is coupled to the processor. The processor is configured to run a program or instructions to implement each process of the foregoing embodiment of the RO determining method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the RO determining method, with the same technical effect achieved. To avoid repetition, details are not described herein again.

An embodiment of this application further provides an RO determining system, including a terminal. The terminal may be configured to perform the steps of the foregoing RO determining method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

Based on the foregoing descriptions of the implementations, a person skilled in the art may clearly understand that the foregoing embodiment methods can be implemented by using a computer software product in combination with a necessary general hardware platform, or by using hardware only. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners of embodiments without departing from principles of this application and the protection scope of the claims, and all such manners of embodiments fall within the protection scope of this application.

**Claims**

1.    A random access occasion RO determining method, comprising:
determining, by a terminal based on ROs or RO sets respectively associated with at least one synchronization signal block SSB or based on a physical random access channel PRACH resource configuration, ROs or RO sets used for PRACH transmission.

2.    The RO determining method according to claim 1, wherein quantities of ROs or RO sets associated with a same SSB in different time units are the same, or frequency domain resource positions of at least some ROs or RO sets associated with a same SSB in different time units are the same.

3.    The RO determining method according to claim 1, wherein quantities of ROs or RO sets associated with a same SSB in different time units are not completely the same, or frequency domain resource positions of at least some ROs or RO sets associated with a same SSB in different time units are different.

4.    The RO determining method according to claim 3, wherein the determining, by a terminal based on ROs or RO sets respectively associated with at least one SSB, ROs or RO sets used for PRACH transmission comprises:

determining, by the terminal based on ROs or RO sets respectively corresponding to a first SSB in P time units corresponding to a same quantity of ROs or RO sets, the ROs or RO sets used for PRACH transmission; or determining, by the terminal based on ROs or RO sets respectively corresponding to a first SSB in P time units corresponding to different quantities of ROs or RO sets, the ROs or RO sets used for PRACH transmission, wherein
P is an integer greater than or equal to 1.

5.    The RO determining method according to claim 4, wherein the determining, by the terminal based on ROs or RO sets respectively corresponding to a first SSB in P time units corresponding to a same quantity of ROs or RO sets, the ROs or RO sets used for PRACH transmission comprises:

in a case that quantities of ROs or RO sets respectively corresponding to the first SSB in at least two time units are different, classifying, by the terminal, ROs or RO sets respectively corresponding to the at least two time units into at least two categories of ROs or RO sets, wherein in any category of ROs or RO sets, quantities of ROs or RO sets respectively corresponding to the first SSB in different time units are the same; and
determining, by the terminal based on ROs or RO sets that are in any category of ROs or RO sets and respectively corresponding to the first SSB in the P time units, the ROs or RO sets used for PRACH transmission.

6.    The RO determining method according to claim 5, wherein the determining, by the terminal based on ROs or RO sets respectively corresponding to a first SSB in P time units corresponding to a same quantity of ROs or RO sets, the ROs or RO sets used for PRACH transmission comprises:
determining, based on different rules, the ROs or RO sets used for PRACH transmission respectively from the at least two categories of ROs or RO sets.

7. The RO determining method according to claim 4, wherein the determining, by the terminal based on ROs or RO sets respectively corresponding to a first SSB in P time units corresponding to different quantities of ROs or RO sets, the ROs or RO sets used for PRACH transmission comprises:

    determining, by the terminal, Q ROs or RO sets from ROs or RO sets corresponding to the first SSB in a first time unit, wherein Q is an integer greater than or equal to 1, Q is determined based on a smaller one of quantities of ROs or RO sets respectively corresponding to the first SSB in the P time units, and the first time unit is a time unit that is in the P time units and in which a quantity of ROs or RO sets corresponding to the first SSB is larger than quantities of ROs or RO sets corresponding to the first SSB in other time units in the P time units; and
    determining, by the terminal based on the Q ROs or RO sets, and the ROs or RO sets corresponding to the first SSB in the other time units, the ROs or RO sets used for PRACH transmission.

8. The RO determining method according to claim 7, wherein the determining, by the terminal, Q ROs or RO sets from ROs or RO sets corresponding to the first SSB in a first time unit comprises:
determining, by the terminal, that first Q or last Q ROs or RO sets or Q ROs or RO sets at preset positions among the ROs or RO sets corresponding to the first SSB in the first time unit are the Q ROs or RO sets.

9. The RO determining method according to any one of claims 1 to 8, wherein the determining ROs or RO sets used for PRACH transmission comprises any one of the following:

    determining, by the terminal, that the ROs or RO sets used for PRACH transmission comprise ROs or RO sets located at different times and at a same frequency domain position among ROs or RO sets corresponding to a first SSB;
    determining, by the terminal, that the ROs or RO sets used for PRACH transmission comprise ROs or RO sets located at different times and at different frequency domain positions among ROs or RO sets corresponding to a first SSB;
    determining, by the terminal, that the ROs or RO sets used for PRACH transmission comprise ROs or RO sets located at different times and indicated by a same index among ROs or RO sets corresponding to a first SSB;
    determining, by the terminal, that the ROs or RO sets used for PRACH transmission comprise ROs or RO sets located at different times and indicated by different indexes among ROs or RO sets corresponding to a first SSB;
    determining, by the terminal based on first indication information from a network side, the ROs or RO sets used for PRACH transmission from the ROs or RO sets respectively associated with the at least one SSB, wherein the first indication information is used to indicate positions of the ROs or RO sets used for PRACH transmission; and
    determining, by the terminal based on second indication information from a network side, the ROs or RO sets used for PRACH transmission from the ROs or RO sets respectively associated with the at least one SSB, wherein the second indication information is used to indicate a rule for determining the ROs or RO sets used for PRACH transmission, wherein
    the first SSB is any one of the at least one SSB, and a time unit comprises one or more times.

10. The RO determining method according to claim 9, wherein the index is used to identify at least one of all frequency-division-multiplexed ROs or RO sets in any time unit; or the index is used to identify at least one of ROs or RO sets corresponding to any SSB in a same time unit.

11. The RO determining method according to any one of claims 1 to 10, wherein the ROs or RO sets used for PRACH transmission are specifically used for PRACH transmission with repetitions.

12. The RO determining method according to any one of claims 1 to 11, wherein the ROs or RO sets used for PRACH transmission are specifically used for PRACH transmission with repetitions in frequency-hopping mode.

13. The RO determining method according to claim 12, wherein any one of the at least one SSB corresponds to an RO set comprising ROs at R adjacent times and at a same frequency domain position, wherein R is an integer greater than or equal to 1.

14. The RO determining method according to claim 1, wherein the PRACH is used in a random access procedure for a system information request.

15. The RO determining method according to claim 14, wherein the determining, based on a PRACH resource configuration, ROs or RO sets used for PRACH transmission comprises:

in a case that PRACH transmission with repetitions is applicable to the random access procedure and that a PRACH resource configuration matching the PRACH transmission with repetitions and dedicated to the random access procedure for the system information request is configured, determining that the ROs or RO sets used for PRACH transmission comprise PRACH resources matching the PRACH transmission with repetitions and dedicated to the random access procedure for the system information request;

in a case that PRACH transmission with repetitions is applicable to the random access procedure and that no PRACH resource configuration matching the PRACH transmission with repetitions and dedicated to the system information request is configured, determining that the ROs or RO sets used for PRACH transmission comprise resources for the PRACH transmission with repetitions;

in a case that PRACH transmission with repetitions is applicable to the random access procedure, and that no PRACH resource configuration matching the PRACH transmission with repetitions and dedicated to the random access procedure for the system information request is configured, but that a PRACH resource configuration dedicated to the random access procedure for the system information request with a greater number of repetitions than that in the PRACH transmission with repetitions is configured, determining that the ROs or RO sets used for PRACH transmission comprise PRACH resources dedicated to the random access procedure for the system information request with the greater number of repetitions than that in the PRACH transmission with repetitions; or

in a case that PRACH transmission with repetitions is inapplicable to the random access procedure and that a PRACH resource configuration determined based on SI-RequestConfig and dedicated to the random access procedure for the system information request is configured, determining that the ROs or RO sets used for PRACH transmission comprise PRACH resources determined based on SI-RequestConfig and dedicated to the random access procedure for the system information request.

16. The RO determining method according to claim 14 or 15, wherein the method further comprises:

obtaining, from system information SI, the PRACH resource configuration dedicated to the random access procedure for the system information request, wherein
the PRACH resource configuration comprises one or more of the following:

a time-frequency domain resource configuration;
a preamble (preamble) resource configuration;
the number of repetitions; and
parameters related to PRACH transmission.

17. The RO determining method according to claim 15, wherein after the determining that the ROs or RO sets used for PRACH transmission comprise resources for the PRACH transmission with repetitions, the method further comprises:
sending system information request information.

18. The RO determining method according to any one of claims 1 to 17, wherein the determining ROs or RO sets used for PRACH transmission comprises: determining, within a time window with a length of Z, RO sets used for PRACH transmission with repetitions, wherein Z is determined based on a system information request period SI request period or determined based on a network configuration or a predefined rule.

19. A random access occasion RO determining apparatus, comprising:
a first determining module, configured to determine, based on ROs or RO sets respectively associated with at least one SSB or based on a PRACH resource configuration, ROs or RO sets used for PRACH transmission.

20. The RO determining apparatus according to claim 19, wherein the first determining module is configured to:

determine, based on ROs or RO sets respectively corresponding to a first SSB in P time units corresponding to a same quantity of ROs or RO sets, the ROs or RO sets used for PRACH transmission; or
determine, based on ROs or RO sets respectively corresponding to a first SSB in P time units corresponding to different quantities of ROs or RO sets, the ROs or RO sets used for PRACH transmission, wherein

P is an integer greater than or equal to 1.

21. The RO determining apparatus according to claim 20, wherein the first determining module is configured to:

in a case that quantities of ROs or RO sets respectively corresponding to the first SSB in at least two time units are different, classify ROs or RO sets respectively corresponding to the at least two time units into at least two categories of ROs or RO sets, wherein in any category of ROs or RO sets, quantities of ROs or RO sets respectively corresponding to the first SSB in different time units are the same; and
determine, based on ROs or RO sets that are in any category of ROs or RO sets and respectively corresponding to the first SSB in the P time units, the ROs or RO sets used for PRACH transmission.

22. The RO determining apparatus according to claim 21, wherein the first determining module is configured to: determine, based on different rules, the ROs or RO sets used for PRACH transmission respectively from the at least two categories of ROs or RO sets.

23. The RO determining apparatus according to claim 20, wherein the first determining module is configured to:

determine Q ROs or RO sets from ROs or RO sets corresponding to the first SSB in a first time unit, wherein Q is an integer greater than or equal to 1, Q is determined based on a smaller one of quantities of ROs or RO sets respectively corresponding to the first SSB in the P time units, and the first time unit is a time unit that is in the P time units and in which a quantity of ROs or RO sets corresponding to the first SSB is larger than quantities of ROs or RO sets corresponding to the first SSB in other time units in the P time units; and
determine, based on the Q ROs or RO sets, and the ROs or RO sets corresponding to the first SSB in the other time units, the ROs or RO sets used for PRACH transmission.

24. The RO determining apparatus according to claim 23, wherein the first determining module is configured to: determine that first Q or last Q ROs or RO sets or Q ROs or RO sets at preset positions among the ROs or RO sets corresponding to the first SSB in the first time unit are the Q ROs or RO sets.

25. The RO determining apparatus according to any one of claims 19 to 24, wherein the first determining module is configured to perform any one of the following:

determining that the ROs or RO sets used for PRACH transmission comprise ROs or RO sets located at different times and at a same frequency domain position among ROs or RO sets corresponding to a first SSB;
determining that the ROs or RO sets used for PRACH transmission comprise ROs or RO sets located at different times and at different frequency domain positions among ROs or RO sets corresponding to a first SSB;
determining that the ROs or RO sets used for PRACH transmission comprise ROs or RO sets located at different times and indicated by a same index among ROs or RO sets corresponding to a first SSB;
determining that the ROs or RO sets used for PRACH transmission comprise ROs or RO sets located at different times and indicated by different indexes among ROs or RO sets corresponding to a first SSB;
determining, based on first indication information from a network side, the ROs or RO sets used for PRACH transmission from the ROs or RO sets respectively associated with the at least one SSB, wherein the first indication information is used to indicate positions of the ROs or RO sets used for PRACH transmission; and
determining, based on second indication information from a network side, the ROs or RO sets used for PRACH transmission from the ROs or RO sets respectively associated with the at least one SSB, wherein the second indication information is used to indicate a rule for determining the ROs or RO sets used for PRACH transmission, wherein
the first SSB is any one of the at least one SSB, and a time unit comprises one or more times.

26. The RO determining apparatus according to claim 19, wherein the PRACH is used in a random access procedure for a system information request.

27. The RO determining apparatus according to claim 26, wherein the first determining module is configured to:

in a case that PRACH transmission with repetitions is applicable to the random access procedure and that a PRACH resource configuration matching the PRACH transmission with repetitions and dedicated to the random access procedure for the system information request is configured, determine that the ROs or RO sets used for PRACH transmission comprise PRACH resources matching the PRACH transmission with repetitions and dedicated to the random access procedure for the system information request;

in a case that PRACH transmission with repetitions is applicable to the random access procedure and that no PRACH resource configuration matching the PRACH transmission with repetitions and dedicated to the system information request is configured, determine that the ROs or RO sets used for PRACH transmission comprise resources for the PRACH transmission with repetitions;

in a case that PRACH transmission with repetitions is applicable to the random access procedure, and that no PRACH resource configuration matching the PRACH transmission with repetitions and dedicated to the random access procedure for the system information request is configured, but that a PRACH resource configuration dedicated to the random access procedure for the system information request with a greater number of repetitions than that in the PRACH transmission with repetitions is configured, determine that the ROs or RO sets used for PRACH transmission comprise PRACH resources dedicated to the random access procedure for the system information request with the greater number of repetitions than that in the PRACH transmission with repetitions; or

in a case that PRACH transmission with repetitions is inapplicable to the random access procedure and that a PRACH resource configuration determined based on SI-RequestConfig and dedicated to the random access procedure for the system information request is configured, determine that the ROs or RO sets used for PRACH transmission comprise PRACH resources determined based on SI-RequestConfig and dedicated to the random access procedure for the system information request.

28. The RO determining apparatus according to claim 26 or 27, wherein the apparatus further comprises:

an obtaining module, configured to obtain, from system information SI, the PRACH resource configuration dedicated to the random access procedure for the system information request, wherein
the PRACH resource configuration comprises one or more of the following:

a time-frequency domain resource configuration;
a preamble (preamble) resource configuration;
the number of repetitions; and
parameters related to PRACH transmission.

29. The RO determining apparatus according to claim 27, wherein the apparatus further comprises:
a sending module, configured to send system information request information after it is determined that the ROs or RO sets used for PRACH transmission comprise the resources for the PRACH transmission with repetitions.

30. The RO determining apparatus according to any one of claims 19 to 29, wherein the first determining module is configured to determine, within a time window with a length of Z, RO sets used for PRACH transmission with repetitions, wherein Z is determined based on a system information request period SI request period or determined based on a network configuration or a predefined rule.

31. A terminal, comprising a processor and a memory, wherein the memory stores a program or instructions capable of running on the processor, and when the program or instructions are executed by the processor, the steps of the RO determining method according to any one of claims 1 to 18 are implemented.

32. A readable storage medium, wherein the readable storage medium stores a program or instructions, and when the program or instructions are executed by a processor, the steps of the RO determining method according to any one of claims 1 to 18 are implemented.

FIG. 1

FIG. 2

Frequency
domain

| | | | |
|---|---|---|---|
| SSB#2/3 RO#1 | SSB#6/7 RO#3 | SSB#2/3 RO#5 | SSB#6/7 RO#7 |
| SSB#0/1 RO#0 | SSB#4/5 RO#2 | SSB#0/1 RO#4 | SSB#4/5 RO#6 |

SSB &RO mapping (mapping
between SSB and RO)

Time domain
(time)

## FIG. 3

| | | | | | | | |
|---|---|---|---|---|---|---|---|
| SSB#1 | SSB#3 | SSB#1 | SSB#3 | SSB#1 | SSB#3 | SSB#1 | SSB#3 |
| SSB#1 | SSB#3 | SSB#1 | SSB#3 | SSB#1 | SSB#3 | SSB#1 | SSB#3 |
| SSB#0 | SSB#2 | SSB#0 | SSB#2 | SSB#0 | SSB#2 | SSB#0 | SSB#2 |
| SSB#0 | SSB#2 | SSB#0 | SSB#2 | SSB#0 | SSB#2 | SSB#0 | SSB#2 |

## FIG. 4

A terminal determines, based on ROs or RO sets respectively associated with at least one SSB or based on a PRACH resource configuration, ROs or RO sets used for PRACH transmission — 500

## FIG. 5

FIG. 6

FIG. 7

FIG. 8

FIG. 9

FIG. 10

Frequency domain
(frequency)

| | | |
|---|---|---|
| f7 | SSB#0, RO group#1 | SSB#1, RO group#1 | SSB#2, RO group#1 |

SSB#0, RO group#1

SSB#1, RO group#1

SSB#2, RO group#1

f6

SSB#0, RO group#0

SSB#1, RO group#0

SSB#2, RO group#0

f5

SSB#2, RO group#1

SSB#0, RO group#1

SSB#1, RO group#1

f4

SSB#2, RO group#0

SSB#0, RO group#0

SSB#1, RO group#0

f3

SSB#1, RO group#1

SSB#2, RO group#1

SSB#0, RO group#1

f2

SSB#1, RO group#0

SSB#2, RO group#0

SSB#0, RO group#0

f1

SSB#0, RO group#1

SSB#1, RO group#1

SSB#2, RO group#1

f0

SSB#0, RO group#0

SSB#1, RO group#0

SSB#2, RO group#0

t0          t1          t2          Time domain
(time)

FIG. 11

1200

Communication device

1201    Processor  ⟺  Memory    1202

FIG. 12

FIG. 13

1400

RO determining apparatus

1410

First determining module

FIG. 14

## INTERNATIONAL SEARCH REPORT

| International application No. |
|---|
| **PCT/CN2024/092139** |

| A. | CLASSIFICATION OF SUBJECT MATTER |
|---|---|
| | H04W74/08(2024.01)i |

According to International Patent Classification (IPC) or to both national classification and IPC

| B. | FIELDS SEARCHED |
|---|---|

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    3GPP, CNTXT, ENTXT, ENTXTC, VEN: 不同, 多个, 单个, 同一个, 相同, 随机接入, 时机, 时间单元, 时隙, 同步信号块, 组, 映射, 关联, 索引, 跳频, multi, prach, RACH, occasion, RO, slot, SSB, group, map, associat+, index, hopping

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021207925 A1 (GUANGDONG OPPO MOBILE TELECOMMUNICATIONS CORP., LTD.) 21 October 2021 (2021-10-21)<br>    description, paragraphs [0057]-[0135], and figures 3-8 | 1-2, 9-14, 16-20, 25-26, 28-32 |
| X | CN 116073967 A (BEIJING UNISOC COMMUNICATION TECHNOLOGY CO., LTD.) 05 May 2023 (2023-05-05)<br>    description, paragraphs [0201]-[0353] | 1-2, 9-14, 16-20, 25-26, 28-32 |
| PX | WO 2024027306 A1 (DATANG MOBILE COMMUNICATIONS EQUIPMENT CO., LTD.) 08 February 2024 (2024-02-08)<br>    description, paragraphs [0008]-[0246] | 1-2, 9-14, 16-20, 25-26, 28-32 |
| PX | CN 117322120 A (BEIJING XIAOMI MOBILE SOFTWARE CO., LTD.) 29 December 2023 (2023-12-29)<br>    description, paragraphs [0024]-[0069] | 1-2, 9-14, 16-20, 25-26, 28-32 |
| A | WO 2023055387 A1 (NOKIA TECHNOLOGIES OY et al.) 06 April 2023 (2023-04-06)<br>    entire document | 1-32 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 July 2024** | **24 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/092139** |

| C. | DOCUMENTS CONSIDERED TO BE RELEVANT | |
| --- | --- | --- |
| Category* | Citation of document, with indication, where appropriate, of the relevant passages | Relevant to claim No. |
| A | OPPO. "PRACH coverage enhancements"<br>*3GPP TSG RAN WG1 #112 bis-e, R1-2302573*, 07 April 2023 (2023-04-07),<br>entire document | 1-32 |

Form PCT/ISA/210 (second sheet) (July 2022)

**INTERNATIONAL SEARCH REPORT**
Information on patent family members

International application No.

**PCT/CN2024/092139**

| Patent document cited in search report | | | Publication date (day/month/year) | Patent family member(s) | | | Publication date (day/month/year) |
|---|---|---|---|---|---|---|---|
| WO | 2021207925 | A1 | 21 October 2021 | US | 2023062230 | A1 | 02 March 2023 |
| | | | | EP | 4138504 | A1 | 22 February 2023 |
| | | | | EP | 4138504 | A4 | 31 May 2023 |
| | | | | CN | 115399051 | A | 25 November 2022 |
| CN | 116073967 | A | 05 May 2023 | WO | 2023071843 | A1 | 04 May 2023 |
| WO | 2024027306 | A1 | 08 February 2024 | CN | 117560785 | A | 13 February 2024 |
| CN | 117322120 | A | 29 December 2023 | None | | | |
| WO | 2023055387 | A1 | 06 April 2023 | None | | | |

Form PCT/ISA/210 (patent family annex) (July 2022)

**REFERENCES CITED IN THE DESCRIPTION**

**Patent documents cited in the description**

- CN 202310546464

- CN 202311010116